# EUROPEAN PATENT SPECIFICATION

(11) **EP 4 492 911 B1**
(45) Date of publication and mention of the grant of the patent: **07.10.2026**
(21) Application number: 24198807.0
(22) Date of filing: 09.05.2017
(51) Int. Cl.: H04W 76/22, H04W 76/11, H04W 76/19

(54) **SESSION MANAGEMENT METHOD AND SYSTEM, AND TERMINAL**
SITZUNGSVERWALTUNGSVERFAHREN UND -SYSTEM SOWIE ENDGERÄT
PROCÉDÉ ET SYSTÈME DE GESTION DE SESSION, ET TERMINAL

(43) Date of publication of application: 15.01.2025
(62) Document number(s) of the earlier application(s) in accordance with Art. 76 EPC: 17909105.3 / 3 637 683
(73) Proprietor: Huawei Technologies Co., Ltd., Shenzhen, Guangdong 518129 (CN)
(72) Inventor: DOU, Fenghui, Shenzhen, 518129 (CN); HE, Yue, Shenzhen, 518129 (CN); JIN, Hui, Shenzhen, 518129 (CN); OUYANG, Guowei, Shenzhen, 518129 (CN); YANG, Haorui, Shenzhen, 518129 (CN)
(74) Representative: Epping - Hermann - Fischer

(56) References cited:
- SAMSUNG: "Baseline description for Network Function selection", vol. SA WG2, no. Spokane, USA; 20170116 - 20170120, 16 January 2017 (2017-01-16), XP051216447, Retrieved from the Internet <URL:http://www.3gpp.org/ftp/Meetings_3GPP_SYNC/SA2/Docs/> [retrieved on 20170116]
- "3rd Generation Partnership Project; Technical Specification Group Services and System Aspects; System Architecture for the 5G System; Stage 2 (Release 15)", 3GPP STANDARD ; TECHNICAL SPECIFICATION ; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.4.0, 20 April 2017 (2017-04-20), pages 1 - 123, XP051298170
- NOKIA ET AL: "Overall architecture proposal", vol. SA WG2, no. Spokane, WA, USA; 20170116 - 20170120, 19 January 2017 (2017-01-19), XP051216154, Retrieved from the Internet <URL:http://www.3gpp.org/ftp/Meetings_3GPP_SYNC/SA2/_Update03/> [retrieved on 20170119]

## Description

### TECHNICAL FIELD

Embodiments of the present disclosure relate to the field of communications technologies, and in particular, to a session management method, apparatus and computer readable storage medium.

### BACKGROUND

In the 5th-generation mobile communication technology (5-Generation, 5G), a PDU session (session) used to provide a protocol data unit (Protocol Data Unit, PDU) connection service exists between user equipment (User Equipment, UE) and a data network (Date Network, DN). Session and service continuity modes that are usually used for the PDU session are a session and service continuity mode (Session and Service Continuity mode, SSC mode) 1 and an SSC mode 2.

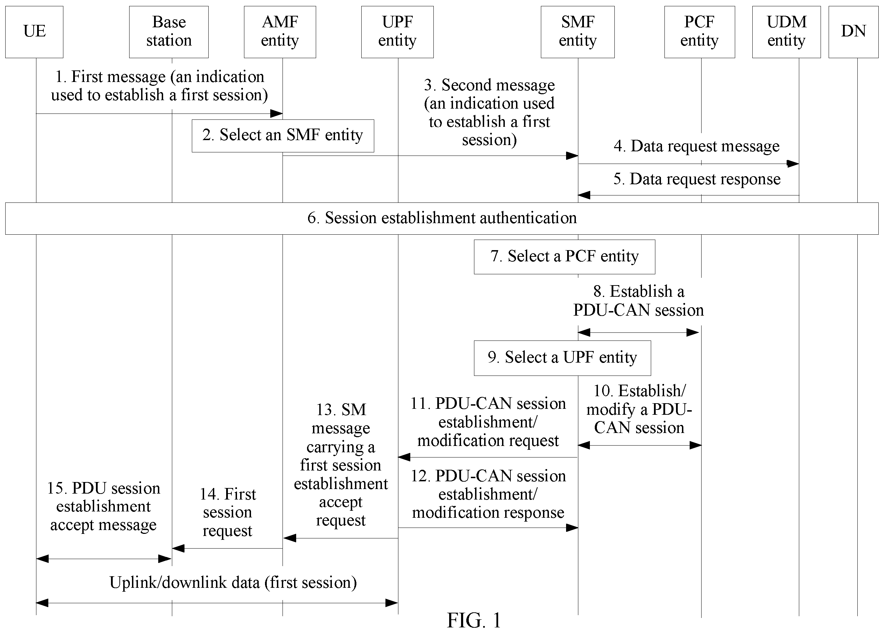

As shown in FIG. 1, FIG. 1 shows a procedure for establishing a session of an SSC mode 1. To be specific, UE sends a first message used to instruct to establish a session; after selecting a session management function (Session Management Function, SMF) entity based on the first message, an access and mobility management function (Authentication and Mobility Management Function, AMF) entity sends the first message to the selected SMF entity; and then, when the SMF entity receives the first message sent by the UE, the SMF entity selects a new user plane function (User Plan Function, UPF) entity, to establish a first PDU session between the user equipment and the SMF entity.

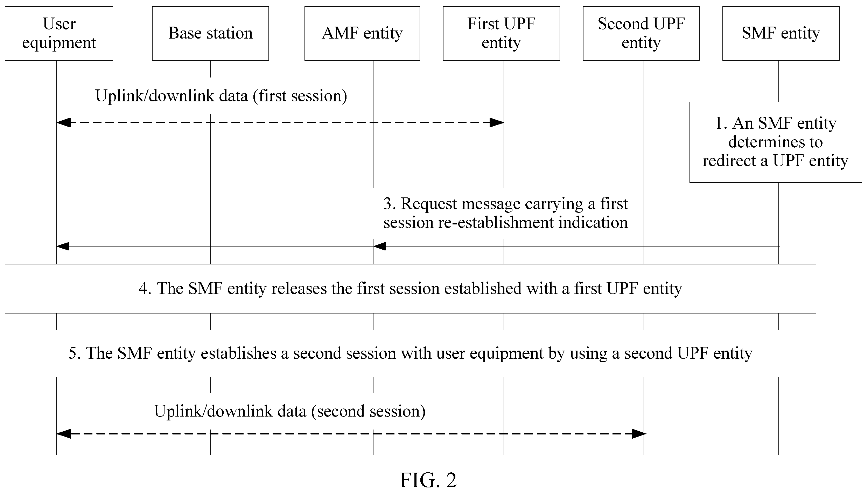

In a conventional technical solution, as shown in FIG. 2, FIG. 2 is a schematic flowchart of UPF entity relocation when a session of an SSC mode 1 is in an active state. In FIG. 2, an SMF entity determines that there is a need to change again a UPF entity with which UE establishes a session. In this case, the SMF entity sends a second message to the UE by using an AMF entity. The second message is used to instruct the UE to re-establish a PDU session that has a same data network (Data Network, DN) as the session. Then, the SMF entity releases a first PDU session, and when receiving a request that is sent by the UE and that is used to establish a second session, the SMF entity establishes a second session with the user equipment by using a first UPF entity. However, the conventional technical solution is applicable to only a procedure in which when a session mode is in an active state, an SMF entity determines that there is a need to change again a UPF entity with which UE establishes a session. If the session is in an inactive state (for example, the UE is in an idle state, or the UE is in a connected state but the session is in an inactive state), a procedure of how to change again a UPF entity with which the UE establishes a session is not clear.

SAMSUNG, "Baseline description for Network Function selection", vol. SA WG2, no. Spokane, USA; 20170116 - 20170120, (20170116), 3GPP DRAFT; S2-170258-NFSELECTIONBASELINE_TS23501, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, XP051216447 discloses a proposal for Network Function selection. Furthermore the document discloses a usage scenario for AMF selection function, for SMF selection function and for UPF selection function. Due to UE mobility when the PDU session is modified and the UPF need to be relocated, the SMF shall select a proper target UPF. "3rd Generation Partnership Project; Technical Specification Group Services and System Aspects; System Architecture for H04L the 5G System; Stage 2 (Release 15)", H04W 3GPP STANDARD ; TECHNICAL SPECIFICATION ; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, vol. SAWG2, no. V0.4.0, 20 April 2017 (2017-04-20), pages 1-123, XP051298170, defines the Stage 2 system architecture for the 5G System. The 5G System provides data connectivity and services. This disclosure covers both roaming and non-roaming scenarios in all aspects, including interworking between 5GS and EPS, mobility within 5GS, policy control and charging, and authentication.

NOKIA ET AL: "Overall architecture proposal", 3GPP DRAFT; S2-170570-OVERALLARCHITECTURE-V7, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, vol. SA WG2, no. Spokane, WA, USA; 20170116 - 20170120 19 January 2017 (2017-01-19), XP051216154, describes the architecture for the 5G system and proposes to include overall architecture in the System Architecture TS.

### SUMMARY

This disclosure provides a session management method performed by a user equipment, an apparatus for user equipment and a computer readable storage medium, so as to resolve a prior-art problem of how to relocate a UPF entity when a session is in an inactive state.

The present invention is set out in the independent claims as appended. Advantageous features are defined in the dependent claims.

### BRIEF DESCRIPTION OF DRAWINGS

FIG. 1 is a first schematic flowchart of a session establishment method in the prior art;
FIG. 2 is a second schematic flowchart of a session management method in the prior art;
FIG. 3 is a third schematic flowchart of a session management method in the prior art;
FIG. 4 is an architectural diagram of a system to which a session management method is applied according to an example of the present disclosure;
FIG. 5 is a schematic structural diagram of an AMF entity according to an example of the present disclosure;
FIG. 6 is a schematic structural diagram of an SMF entity according to an example of the present disclosure;
FIG. 7 is a schematic structural diagram of UE according to an example of the present disclosure;
FIG. 8 is a first schematic flowchart of a session management method according to an example of the present disclosure;
FIG. 9A and FIG. 9B are a second schematic flowchart of a session management method according to an example of the present disclosure;
FIG. 10A and FIG. 10B are a third schematic flowchart of a session management method according to an example of the present disclosure;
FIG. 11A and FIG. 11B are a fourth schematic flowchart of a session management method according to an example of the present disclosure;
FIG. 12A, FIG. 12B, and FIG. 12C are a fourth schematic flowchart of a session management method according to an example of the present disclosure;
FIG. 13A, FIG. 13B, and FIG. 13C are a fifth schematic flowchart of a session management method according to an example of the present disclosure;
FIG. 14A, FIG. 14B, and FIG. 14C are a schematic flowchart of specific use of a session management method according to an example of the present disclosure;
FIG. 15A, FIG. 15B, and FIG. 15C are a schematic flowchart of specific use of another session management method according to an example of the present disclosure;
FIG. 16 is a first schematic structural diagram of an AMF entity according to an example of the present disclosure;
FIG. 17 is a second schematic structural diagram of an AMF entity according to an example of the present disclosure;
FIG. 18 is a first schematic structural diagram of an SMF entity according to an example of the present disclosure;
FIG. 19 is a second schematic structural diagram of an SMF entity according to an example of the present disclosure;
FIG. 20 is a first schematic structural diagram of user equipment according to an example of the present disclosure;
FIG. 21 is a second schematic structural diagram of user equipment according to an example of the present disclosure;
FIG. 22 is a third schematic structural diagram of user equipment according to an example of the present disclosure; and
FIG. 23 is a third schematic structural diagram of an SMF entity according to an example of the present disclosure.

### DETAILED DESCRIPTION

To facilitate clear description of the technical solutions in the examples of the present disclosure, words such as "first" and "second", are used in the examples of the present disclosure to distinguish between same items or similar items with basically same functions or purposes. A person skilled in the art may understand that the words such as "first" and "second" do not restrict a quantity and an implementation sequence.

In the examples of the present disclosure, a PDU session is a connection between UE and a data network that is used to provide a connection service. A type of the connection may include an IP type, an Ethernet type (Ethernet type), and a non-IP type.

An idle state or a connected state in the examples of the present disclosure is a connection management (Connection Management) status of UE. That the UE is in an idle state means that the connection management status of the UE is the idle state, namely, CM-IDLE.

That the UE is in a connected state means that the connection management status of the UE is the connected state, namely, CM-CONNECTED.

In the examples of the present disclosure, an active status of a session means whether a user plane connection that is corresponding to the session and that is between UE and a UPF entity exists, including whether a DRB (data radio bearer) between the UE and a base station and an N3 connection between the base station and the UPF entity exist.

That the session is in an active state means that the user plane connection that is corresponding to the session and that is between the UE and the UPF entity exists. To be specific, the DRB and the N3 connection that are corresponding to the session both exist. The UE can directly receive and send data in the session.

That the session is in an inactive state means that the user plane connection between the UE and the UPF entity does not exist. Specifically, at least one of the data radio bearer (data radio bearer, DRB) between the UE and the base station, and the N3 connection between the base station and the UPF entity does not exist. The UE cannot directly receive and send data in the session. If in the session, there is uplink data that needs to be sent, or when there is downlink data arriving in the session, the UE first needs to perform a service request procedure to activate the session, and the UE can receive and send data only after the session is switched to an active state.

It may be understood that, that a session is in an active state or an inactive state is specific to an established session.

In the examples of the present disclosure, a UPF service area means that for a PDU session, provided that a location of UE is inside the service area, a redirection (namely, relocation) process does not need to be performed on a UPF entity corresponding to the PDU session. The UPF service area may be a set of base stations that a UPF entity can control or to which the UPF entity can be connected, a set of tracking areas (Tracking Area) to which these base stations belong, or a set of cells (cell) that these base stations include.

In the examples of the present disclosure, an area corresponding to a PDU session is a UPF service area of a UPF entity that serves the PDU session, or a particular quantity of subsets selected by using UE as a center from a UPF service area of a UPF entity that serves the PDU session, or a set of a service area of a UPF entity that serves the PDU session and a service area of an adjacent UPF entity that has a same function as the UPF entity, where the set is selected by UE as a center. It should be noted that, the UPF entity may be an anchor UPF entity that serves the PDU session, or may be another UPF entity that serves the PDU session.

It should be noted that a use scenario of the examples of the present disclosure is as follows: UE has a first PDU session. When the first PDU session is in an inactive state, and when a UPF entity corresponding to the first PDU session cannot serve the first PDU session (for example, the UE is outside a service area of the UPF entity corresponding to the first PDU session) as a location of the UE moves, a network or the UE triggers UPF relocation. That the first PDU session in the scenario is in an inactive state includes the following case: The UE is in an idle state, or the UE is in a connected state but the session is in an inactive state.

A service continuity mode of a first PDU session in the examples of the present disclosure may be a first session mode (also referred to as SSC1). The SSC1 means that a network triggers releasing of the first PDU session and instructs UE to re-establish the first PDU session, and that a re-established first PDU session has a same DN as the first PDU session. Certainly, the re-established first PDU session may be understood as a second PDU session, and the second PDU session may replace the first PDU session. As shown in FIG. 2, when determining that a UPF entity needs to be relocated, an SMF entity sends, to user equipment by using an AMF entity, a request message (for example, a request message shown in FIG. 2) used to instruct to re-establish a session. The SMF entity first releases a first PDU session established with the user equipment by using a first UPF entity. Then the SMF entity establishes, by using a second UPF entity, a second PDU session with the user equipment based on a session management connection request sent by the user equipment. Finally, the UE sends data by using the second UPF entity that serves the second PDU session. To be specific, the first PDU session is released before the second PDU session is established.

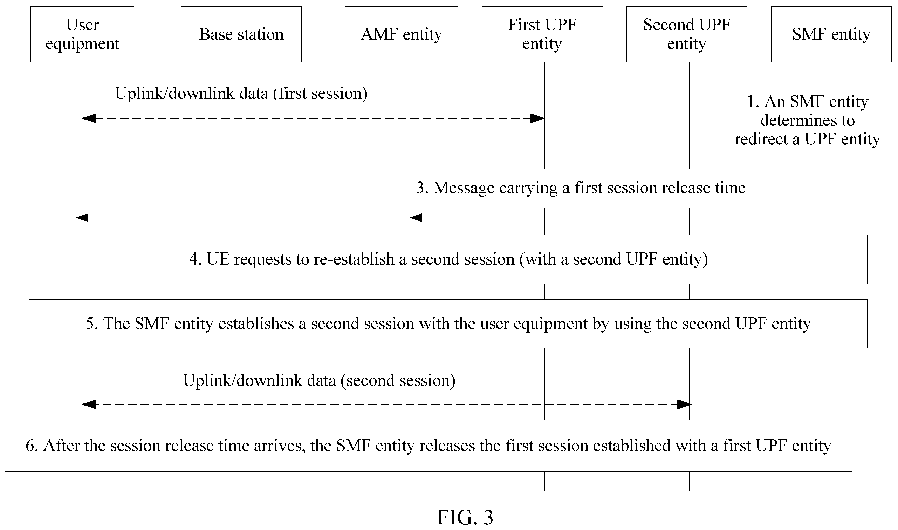

As shown in FIG. 3, a service continuity mode of a first PDU session in the examples of the present disclosure may be a second session mode (also referred to as a session and service continuity second session mode, SSC2). The SSC2 means that a network allows that a second PDU session (a connection established between UE and a second UPF entity) is first established before a first PDU session (a connection established between the UE and a first UPF entity) is released. To be specific, an SMF entity first sends a first message to the UE by using an AMF entity. The first message is used to instruct the user equipment to send a session management connection request in a session release time, so that the SMF entity establishes a second PDU session with the user equipment by using the second UPF entity, and the SMF entity releases, after the session release time arrives, a first PDU session established with the user equipment, that is, a first PDU session established by the SMF entity with the user equipment by using the first UPF entity. To be specific, the first PDU session is released by the SMF entity after the second PDU session is established. The SSC1 means that a network side may trigger releasing of a first PDU session and instruct UE to immediately establish a second PDU session, and that the second PDU session has a same data network DN as the first PDU session. In the SSC1, the first PDU session is first released, and then the second PDU session is established.

The SSC2 means that a network side may trigger UE to establish a second PDU session, and that the second PDU session has a same data network DN as a first PDU session. In the SSC2, the second PDU session is first established, and then the first PDU session is released.

The service continuity mode of the first PDU session in the examples of the present disclosure is mainly the first mode or the second mode, and certainly, may be another mode. The service continuity mode of the first PDU session is not specially limited in the present disclosure. For the first session mode and the second session mode, a UPF entity may be relocated. In this way, a session in the first session mode and that in the second session mode each are related to a particular area (for example, a UPF service area). However, in a conventional solution, it is only defined that an SMF entity relocates a UPF entity when the first session is in an active state. However, regardless of whether the SMF entity uses the session and service continuity first session mode or the session and service continuity second session mode, it is not defined how to relocate a UPF entity if the first session is in an inactive state (UE is in an idle state, or the UE is in a connected state but the session is in an inactive state). As a result, a UPF entity relocation procedure is not performed for the first session in an inactive state, and a location of the UE may be outside a service area of a first UPF entity as the UE moves. Consequently, when the UE has data to be sent/received and enters a connected state, a base station cannot establish a connection to a UPF entity that serves the first session, and the UE cannot normally receive/send data in the first session. In an aspect, when the UE is started to activate the first PDU session (establish a user plane connection of the first PDU session) or response to paging, the SMF entity determines, based on the location of the UE, a UPF service area corresponding to the first PDU session, a mode of the first PDU session, and a carrier policy, whether a UPF entity needs to be relocated. To be specific, when determining that the location of the UE is outside the service area of the UPF entity, the SMF entity determines to relocate a UPF entity; or when determining that the location of the UE is outside the service area of the UPF entity, the SMF entity determines, with reference to the mode of the first PDU session (the first session mode or the second session mode) and/or the carrier policy, to relocate a UPF entity. If a UPF entity needs to be directed, the SMF entity sends, by using an AMF entity to the UE, an identifier of the first PDU session and an indication used to re-establish or modify the first PDU session. After the SMF entity sends, by using an N11 message to the AMF entity, the identifier of the first PDU session and the indication used to re-establish or modify the first PDU session, the AMF entity may encapsulate the identifier and the indication into a service accept message, and send the service accept message to the UE. Alternatively, the SMF entity may encapsulate the identifier and the indication into N1 SM information and sends the N1 SM information to the AMF entity, and then the AMF entity encapsulates the identifier and the indication into a service accept message and sends the service accept message to the UE. After the UE receives the identifier carrying the first PDU session and the indication used to re-establish the first PDU session, the UE requests to establish a second PDU session. In a process of establishing the second PDU session, the SMF entity selects a new UPF entity to serve the second PDU session. After the UE receives the identifier carrying the first PDU session and the indication used to modify the first PDU session, in a possible implementation, the UE triggers a PDU session modification procedure, to be specific, the UE sends a PDU session modification request message; in another more possible implementation, a network triggers a PDU session modification procedure. In the session modification process, the UPF entity corresponding to the first PDU session is relocated to a second UPF entity from the first UPF entity. (It may be understood that, in an example of re-establishing the first PDU session in the present disclosure, the established second PDU session may be used to replace the first PDU session. The second PDU session and the first PDU session have a same DN. After re-establishment is completed, the original first PDU session may be deleted in a signaling manner, or may be deleted on a core network side (for example, the SMF entity/the AMF entity) and a UE side, to be specific, the UE locally deletes the original first PDU session.).

In another aspect, once the UE is outside an area corresponding to the first PDU session (for example, the service area of the UPF entity), UPF entity relocation is triggered. In this case, in a process in which the UE establishes the first PDU session with the SMF entity, the SMF entity provides, for the UE, the area corresponding to the first PDU session. In this way, when the UE is in an idle state, and when the UE detects that the UE moves out of the area corresponding to the first PDU session, the UE triggers a NAS procedure (for example, triggers a PDU session modification procedure or a registration request procedure to update the area corresponding to the first PDU session, or triggers a service request procedure). In this process, the SMF entity determines whether to perform UPF relocation. In this way, it may be ensured that UPF entity relocation is performed before data is transmitted, so as to ensure that data is not lost. In this example, the area corresponding to the first PDU session may be the service area of the UPF entity corresponding to the first PDU session, a particular quantity of subsets selected from the service area of the UPF entity by using the UE as a center (for example, a particular quantity of base stations or a particular quantity of tracking areas), or a set of service areas that are of adj acent UPF entities and that use the UE as a center.

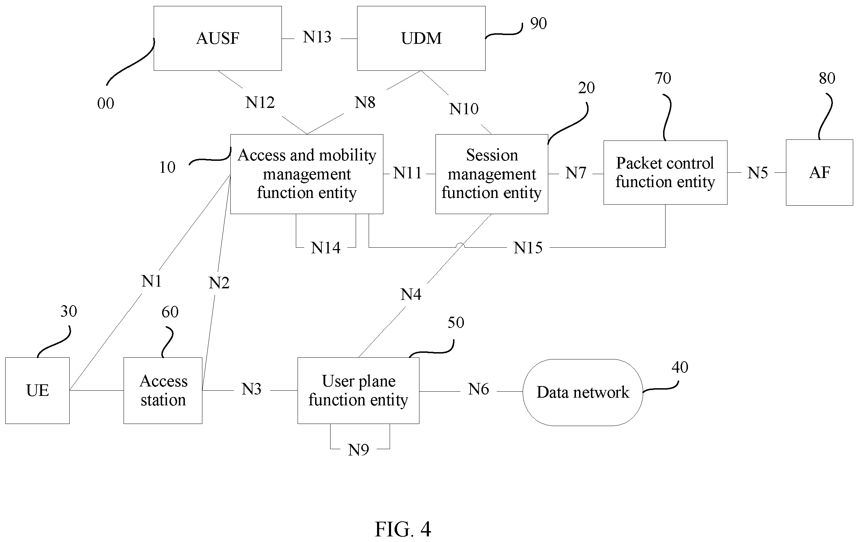

As shown in FIG. 4, FIG. 4 is an architectural diagram of a system to which a session management method is applied according to an example of the present disclosure. The system includes an access and mobility management function AMF entity 10, one or more session management function SMF entities 20, one or more user equipments UEs 30, a data network (Data Network, DN) 40, one or more user plane function UPF entities 50, an access station ((Radio) Access Node, (radio) access station) 60, a packet control function (Packet Control Function, PCF) entity 70, an application function (application function, AF) entity 80, a unified data management (Unified Data Management, UDM) entity 90 configured to store user subscription information, and an authentication server function (Authentication Server Function, AUSF) entity 00.

The access and mobility management function AMF entity 10 is configured to select an SMF entity based on a session connection establishment request sent by the UE 30, so that the selected SMF entity establishes a first PDU session between the UE 30 and the UPF entity 50.

The AMF entity 10 is further configured to forward, to the user equipment, a first message sent by the SMF entity. The first message is used to instruct the user equipment to send a second message (for example, a session connection establishment request message) used to request to establish the first PDU session. The second message is used to instruct to establish the first PDU session. In this way, after receiving the second message, the SMF entity may establish the first PDU session between the UE 30 and the UPF entity based on the second message.

Optionally, the AMF entity 10 stores a mapping relationship between an identifier of the first PDU session and the SMF entity that establishes the first PDU session, and is configured to establish a mapping relationship between identification information and the SMF entity based on the identification information configured by the SMF entity. In this way, in a session re-establishment process, the AMF entity may determine, based on the identifier of the first PDU session, an SMF entity to which a session re-establishment request is forwarded.

Optionally, the AMF entity 10 is further configured to: receive an area that is corresponding to the first PDU session and that is sent by the SMF entity or a service area that is of a UPF entity corresponding to the first PDU session and that is sent by the SMF entity; and store the area corresponding to the first PDU session or the service area of the UPF entity corresponding to the first PDU session. The AMF entity is further configured to: obtain location information of the UE based on a service request message sent by the UE; determine, based on the location information of the UE, whether a location of the UE is outside the area corresponding to the first PDU session; and then, when determining that the location of the UE is outside the area corresponding to the first PDU session, send, to the UE, a request message used to determine to re-establish the first PDU session, or send, to the SMF entity, the location information of the UE or a message indicating that the location of the UE is outside the area corresponding to the first PDU session.

The SMF entity 20 is configured to reallocate a UPF entity to the UE based on the location information of the UE 30 or a feature of data sent by the UE 30 or a location between the UPF entity 50 and the UE 30, and quality of service of a UPF entity, so as to re-establish a second PDU session between the UE and the newly allocated UPF entity, so that the re-established second PDU session can optimize a user plane. The SMF entity 20 is further configured to configure identification information. The identification information is used to instruct the AMF entity to send, to the SMF entity, a request used to re-establish the second PDU session. The session management function entity 20 is further configured to establish a session between the UE 30 and the UPF entity 50, such as a protocol data unit (Protocol Data Unit, PDU) session. The PDU session is used to connect the UE 30 and the DN 40, and the PDU session is used to provide a PDU data packet. The SMF entity is further configured to receive the location information of the UE and an indication indicating that the location of the UE is outside the first PDU session, where the location information and the indication are sent by the AMF entity; and when the location of the UE is outside the area corresponding to the first PDU session, instruct the UE to establish a second PDU session to replace the first PDU session. The SMF entity is further configured to: send, to the UE, the area corresponding to the first PDU session; and send, to the AMF entity, the area corresponding to the first PDU session or the service area of the UPF entity corresponding to the first PDU session. The SMF entity is further configured to: when determining that the location of the UE is outside the area corresponding to the first PDU session but inside the service area of the UPF entity corresponding to the first PDU session, reallocate, to the UE, an area corresponding to the first PDU session.

The UE in this example of the present disclosure is configured to: receive the area that is of the first PDU session and that is sent by the SMF entity; and when the location of the UE is outside the area corresponding to the first PDU session, send, to the AMF entity, an indication indicating that the location of the UE is outside the area of the first PDU session, so as to trigger the AMF entity/the SMF entity to perform relocation.

The plurality of user equipments UEs 30 are configured to communicate with the DN based on an established session.

The data network DN 40 is an external network configured to provide a data service.

The access station 60 is configured to provide a data service for the UE 30, for example, receive data sent by the UE 30 or send data to the UE 30. The access station 60 may be a base station in an actual use process. In this example of the present disclosure, a base station (base station, BS) may be a device that communicates with the user equipment (user equipment, UE) or another communications station such as a relay station, and the base station may provide communication coverage in a specific physical area.

The PCF entity 70 is configured to be used as an interface between a radio frequency part and a packet network (an IP network).

The AF entity 80 is configured to play an effect on routing.

For example, as shown in FIG. 4, the AMF entity 10 and the SMF entity 20 communicate with each other through an interface N11. The AMF entity 10 and the UE 30 communicate with each other through an interface N1. The AMF entity 10 and the access station 60 communicate with each other through an interface N2. The AMF entity 10 and the AUSF entity 00 communicate with each other through an interface N12. The AMF entity 10 and the UDM entity communicate with each other through an interface N8. The AMF entity 10 and the PCF entity communicate with each other through an interface N15. The SMF entity 20 and the UDM entity 90 communicate with each other through an interface N10. The SMF entity 20 and the UPF entity 50 communicate with each other through an interface N4. The UPF entity 50 and the data network 40 communicate with each other through an interface N6. The PCF entity and the AF entity communicate with each other through an interface N5.

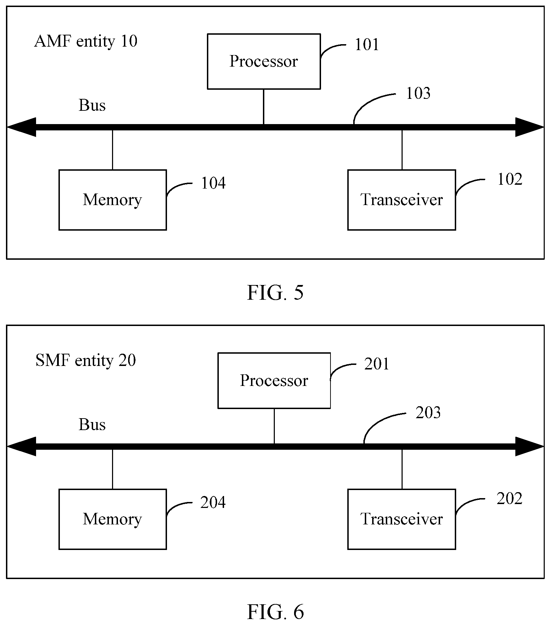

FIG. 5 is a schematic structural diagram of an AMF entity according to an example of the present disclosure. It may be learned from FIG. 5 that an AMF entity 10 includes a processor 101, a transceiver 102, a memory 104, and a bus 103. The transceiver 102, the processor 101, and the memory 104 are interconnected by using the bus 103. The bus 103 may be a PCI bus, an EISA bus, or the like. The bus may be classified into an address bus, a data bus, a control bus, and the like. For ease of representation, only one bold line is used in FIG. 5, but it does not indicate that there is only one bus or one type of bus. The memory 104 is configured to store program code and data of the AMF entity 10. The transceiver 102 is configured to support the AMF entity 10 in communicating with another device. The processor 101 is configured to support the AMF entity 10 in executing the program code and the data stored in the memory 104, to implement a session management method provided in the examples of the present disclosure.

FIG. 6 is a schematic structural diagram of an SMF entity according to an example of the present disclosure. It may be learned from FIG. 6 that an SMF entity 20 includes a processor 201, a transceiver 202, a memory 204, and a bus 203. The transceiver 202, the processor 201, and the memory 204 are interconnected by using the bus 203. The bus 203 may be a PCI bus, an EISA bus, or the like. The bus may be classified into an address bus, a data bus, a control bus, and the like. For ease of representation, only one bold line is used in FIG. 6, but it does not indicate that there is only one bus or one type of bus. The memory 204 is configured to store program code and data of the SMF entity 20. The transceiver 202 is configured to support the SMF entity 20 in communicating with another device. The processor 201 is configured to support the SMF entity 20 in executing the program code and the data stored in the memory 204, to implement a session management method provided in the examples of the present disclosure.

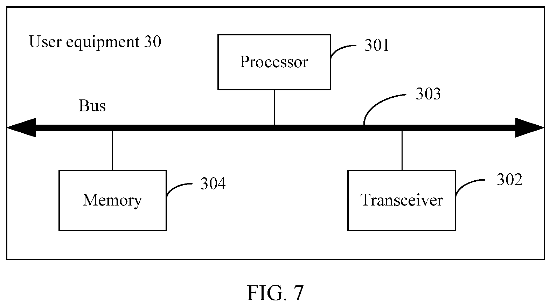

FIG. 7 is a schematic structural diagram of user equipment according to an example of the present disclosure. It may be learned from FIG. 7 that user equipment 30 includes a processor 301, a transceiver 302, a memory 304, and a bus 303. The transceiver 302, the processor 301, and the memory 304 are interconnected by using the bus 303. The bus 303 may be a PCI bus, an EISA bus, or the like. The bus may be classified into an address bus, a data bus, a control bus, and the like. For ease of representation, only one bold line is used in FIG. 7, but it does not indicate that there is only one bus or one type of bus. The memory 304 is configured to store program code and data of the user equipment 30. The transceiver 302 is configured to support the user equipment 30 in communicating with another device. The processor 301 is configured to support the user equipment 30 in executing the program code and the data stored in the memory 304, to implement a session management method provided in the examples of the present disclosure.

In the examples of the present disclosure, UE may be distributed in an entire wireless network, and each UE may be stationary or in motion.

The UE may be a terminal (terminal), a mobile station (mobile station), a subscriber unit (subscriber unit), a station (station), or the like. The UE may be a cellular phone (cellular phone), a personal digital assistant (personal digital assistant, PDA), a wireless modem (Modem), a wireless communications device, a handheld (handheld) device, a laptop computer (laptop computer), a cordless phone (cordless phone), a wireless local loop (wireless local loop, WLL) station, or the like. When the UE is applied to communication in an M2M manner, the UE may be referred to as an M2M terminal, and may be specifically a smart meter, a smart appliance, or the like that supports M2M communication.

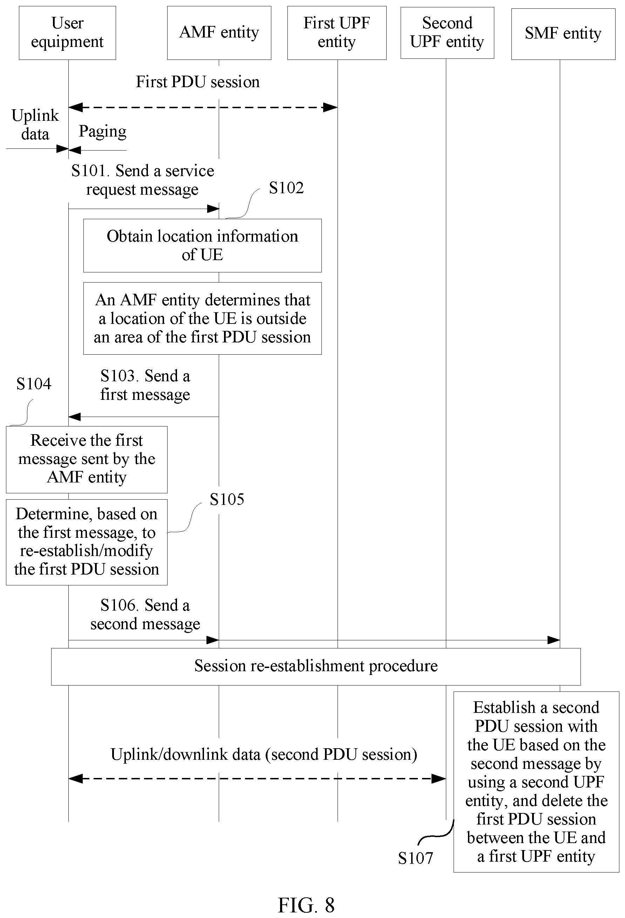

As shown in FIG. 8, FIG. 8 shows a session management method provided in an example of the present disclosure. User equipment UE has a first protocol data unit PDU session, and the method includes the following steps:
S101. The UE sends a service request message to an access and mobility management function AMF entity.
S102. After the access and mobility management function AMF entity determines that the service request message sent by the UE is received, the AMF entity obtains location information of the UE, where the location information is used to determine a location of the UE.

Optionally, the location information of the UE may be a base station identifier (such as an ID) of a base station in which the UE is located, an ID of a cell in which the UE is located, or a tracking area identity (TAI) of a tracking area in which the base station is located.

S103. When determining that the UE moves out of an area corresponding to the first PDU session, the AMF entity sends a first message to the UE, where the first message is used to instruct to re-establish or modify the first PDU session.

Optionally, the area corresponding to the first PDU session may include the following cases: a service area of a UPF entity corresponding to the first PDU session; a partial area selected by using the location of the UE as a center from a service area of a UPF entity corresponding to the first PDU session; an area generated by an SMF entity with reference to a service area of a UPF entity corresponding to the first PDU session and a service area of an adjacent UPF entity having a same function as the UPF entity; an area determined by an SMF entity with reference to a registration (registration) area and a service area of a UPF entity, where the registration area is allocated by the AMF entity to the UE and received by the SMF entity, for example, an intersection set of the registration area and the service area of the UPF entity or a subset of an intersection set of the registration area and the service area of the UPF entity is selected as the area corresponding to the first PDU session; or an area that is corresponding to the first PDU session and that is generated by an SMF entity with reference to a registration area, a service area of a selected UPF entity, and a service area of an adjacent UPF entity having a same function as the UPF entity, where the registration area is allocated by the AMF entity to the UE and received by the SMF entity.

S104. The UE receives the first message sent by the AMF entity.

S105. The UE re-establishes or modifies the first PDU session based on the first message.

It should be noted that the first message may be one of trigger conditions for re-establishing or modifying the first PDU session by the UE. The UE may alternatively re-establish or modify the first PDU session based on the first message and another condition. For example, the UE needs to determine whether an SSC mode of the first PDU session is a first session mode or a second session mode. The another condition is not specifically described or limited in the present disclosure.

In the session management method provided in this example of the present disclosure, the UE sends the service request message to the AMF entity, and then the AMF entity sends, to the UE, the first message used to determine to re-establish the first PDU session. In this way, the first PDU session needs to be re-established before data needs to be transmitted or received, so as to ensure that data that needs to be transmitted or received subsequently is not lost.

Optionally, in an aspect, the first message in this example of the present disclosure is a service accept (Service Accept) message sent by the AMF entity to the UE. The service accept message carries an identifier of the first PDU session and a first indication, the identifier is used to identify the first PDU session, and the first indication is used to instruct to re-establish or modify the PDU session. It may be understood that the first identifier and the first indication are combined and are used by the UE to determine to re-establish or modify the first PDU session. Alternatively, the service accept message carries an identifier of the first PDU session, and the UE determines, based on the identifier and with reference to a status of the first PDU session or a configuration of a DRB, to re-establish the first PDU session. For example, the service accept message carries the identifier of the first PDU session, and a PDU session status carried in the service accept message indicates that a status, of the first PDU session, on a core network side is "unavailable". In this case, the UE determines, based on the identifier of the first PDU session and the state of the first PDU session, to re-establish the first PDU session. Alternatively, the service accept message carries an identifier of the first PDU session, and a radio resource control (Radio Resource Control, RRC) reconfiguration message received by the UE does not include a DRB configuration corresponding to the first PDU session. In this case, the UE determines to re-establish or modify the first PDU session.

Alternatively, the service accept message carries only a first indication, and the first indication is used to instruct to re-establish or modify a PDU session that the UE requests to activate. In this case, correspondingly, the UE adds, to a service request message, an identifier of a session that needs to be activated, and a core network determines, based on the location of the UE, that sessions corresponding to all identifiers need to be re-established or modified.

In another aspect, the first message in this example of the present disclosure is a service reject message sent by the AMF entity to the UE. The service reject message carries an identifier of the first PDU session and a cause value, the identifier is used to identify the first PDU session, and the cause value indicates that the UE moves out of an area corresponding to a PDU session. It may be understood that the cause value essentially indicates that the location of the UE is outside the area corresponding to the first PDU session associated with the identifier. Certainly, the service reject message in this example of the present disclosure may alternatively carry only a cause value, and in this case, the cause value is used to instruct to re-establish or modify a PDU session that the UE requests to activate.

The identifier of the first PDU session is not limited in this example of the present disclosure, provided that the identifier can uniquely identify the first PDU session.

Content carried in the first message is different due to different types of the first message. For different first message types and message content, step S105 in this example of the present disclosure is also different. Therefore, details are described below in detail.

In an aspect, when the first message carries the identifier of the first PDU session and the first indication, step S105 may be specifically implemented in the following manner:
S1051a. If the first indication is used to instruct to re-establish the first PDU session, the UE determines, based on the identifier and the first indication, to re-establish the first PDU session.
S1051b. If the first indication is used to instruct to modify the first PDU session, the UE determines, based on the identifier and the first indication, to modify the first PDU session.

In another aspect, when the first message carries the identifier of the first PDU session, step S105 may be specifically implemented in the following manner:
S1051c. The UE determines, based on the identifier of the first PDU session, to re-establish or modify the first PDU session.

In still another aspect, when the first message is the service reject message, and the service reject message carries the identifier of the first PDU session and the cause value, step S105 may be specifically implemented in the following manner:
S1051d. The UE determines, based on the identifier and the cause value, to re-establish or modify the first PDU session associated with the identifier.

It may be understood that, in this example of the present disclosure, after step S105, the method provided in this example of the present disclosure further includes the following step:
S106. The UE sends a second message to an SMF entity, where the second message is used to request to re-establish or modify the first PDU session.

Optionally, step S106 in this example of the present disclosure may be specifically implemented in the following manner.

If the first message sent by the AMF entity is used to instruct the UE to re-establish the first PDU session, the UE sends, to the SMF entity by using the AMF entity, a second message used to re-establish the first PDU session. The second message may be a PDU session establishment request (PDU session establishment request) message.

If the first message sent by the AMF entity is used to instruct the UE to modify the first PDU session, the UE sends, to the SMF entity by using the AMF entity, a second message used to modify the first PDU session. The second message may be a PDU session modification request (PDU session modification request) message. Alternatively, after receiving the first message used to modify the first PDU session, the UE waits for a PDU session modification command (PDU session modification command) sent by the SMF entity. If the UE does not receive the PDU session modification command sent by the SMF entity, the UE sends, to the AMF entity, the second message used to modify the first PDU session. (For example, the UE sets a timer, and sends a PDU session modification request if the UE does not receive the PDU session modification command when the timer expires.)

It may be understood that, after step S106, the method provided in this example of the present disclosure further includes the following step:
S107. The SMF entity selects, based on the second message (a PDU session establishment request), a second UPF entity, to establish a second PDU session with the UE; or selects, based on the second message (a PDU session modification request), a second UPF entity to serve the first PDU session, and at the same time, updates an IP address, a QoS flow template (a packet filter and a priority), and the like that are corresponding to the second UPF entity.

In this case, in step S107, the SMF entity may establish the second PDU session based on the first session mode, or establish the second PDU session based on the second session mode. This is not limited in this example of the present disclosure.

In this example of the present disclosure, after the AMF entity receives the service request message sent by the user equipment, the AMF entity may perform UPF relocation (to be specific, the AMF entity directly sends, to the UE, an indication used to re-establish the first PDU session, such as the first message), or the SMF entity may perform UPF relocation (to be specific, when the SMF entity determines that the UE moves out of the area corresponding to the first PDU session or determines that the UE moves out of the service area of the UPF entity corresponding to the first PDU session, the SMF entity sends, to the AMF entity, a parameter used to re-establish the first PDU session, and then the AMF entity encapsulates the parameter used to re-establish the first PDU session and then sends an encapsulated parameter to the UE).

For example, the AMF entity may perform UPF relocation in the following manner:
After receiving the service request message sent by the UE, the AMF entity may directly determine, based on a relationship between the location information of the UE and the area corresponding to the first PDU session, whether to send the first message to the UE (It may be understood that, in this case, the AMF entity needs to store at least the area corresponding to the first PDU session.

An implementation of obtaining, by the AMF entity, the area corresponding to the first PDU session is as follows: When the first PDU session is established or activated, the SMF entity sends, to the AMF entity, the area corresponding to the first PDU session; or after the first PDU session is established or activated, when the SMF entity subscribes to mobility event notification of the UE from the AMF entity, the SMF entity provides, for the AMF entity, the area corresponding to the first PDU session. The area may be the UPF service area of the UPF entity corresponding to the first PDU session, or may be a subset of a UPF service area using the location of the UE as a center. Another implementation of obtaining, by the AMF entity, the area corresponding to the first PDU session is as follows: When the first PDU session is established or activated, the SMF entity sends an identifier of a selected UPF entity to the AMF entity, and the AMF entity obtains a UPF service area based on the identifier of the UPF entity and a network topology structure. Specifically, the AMF entity sends the first message to the UE when determining that the location of the UE is outside the area corresponding to the first PDU session; or when determining that the location of the UE is outside the area corresponding to the first PDU session, the AMF entity sends, to the SMF entity, the location of the UE and/or an indication indicating that the location of the UE moves out of the area corresponding to the first PDU session.).

For example, the SMF entity may perform UPF relocation in the following manner:
When determining that the UE moves out of the area corresponding to the first PDU session, the AMF entity sends, to the SMF entity, the location information of the UE and/or indication information. The indication information is used to indicate that the UE moves out of the area corresponding to the PDU session. It may be understood that, the AMF entity further needs to provide, for the SMF entity, the identifier of the first PDU session, so that the SMF entity determines, based on the identifier and the indication information, that the UE moves out of the area corresponding to the first PDU session.

Alternatively, the AMF entity obtains the location information of the UE after receiving the service request message sent by the UE. In this case, the AMF entity directly sends the location information of the UE to the SMF entity. After the SMF entity receives the location information of the UE and/or the indication information, the SMF entity determines whether the location of the UE is outside the area corresponding to the first PDU session or is outside the service area of the UPF entity corresponding to the first PDU session, and the SMF entity sends a first parameter to the AMF entity when determining that the location of the UE is outside the area corresponding to the first PDU session or is outside the service area of the UPF entity corresponding to the first PDU session. The first parameter includes the identifier of the first PDU session and the first indication, or the first parameter includes the identifier of the first PDU session and the cause value. The SMF entity may directly send the first parameter to the AMF entity, or the SMF entity may encapsulate the first parameter as N1 SM information, and then sends the NI SM information to the AMF entity. For the first parameter directly sent by the SMF entity to the AMF entity, the AMF entity encapsulates the first parameter into a service accept message or encapsulates the identifier of the first PDU session and the cause value into a service reject message, and then sends the service accept message or the service reject message to the UE. For the manner in which the SMF entity sends the first parameter to the AMF entity by using the N1 SM information, the AMF entity directly encapsulates the received N1 SM information into a service accept message or a service reject message, and sends the service accept message or the service reject message to UE. It may be understood that, the first parameter may be encapsulated by the SMF entity and then be transparently transmitted by the AMF entity to the UE, or may be sent by the SMF entity to the AMF entity and then be sent by the AMF entity to the UE.

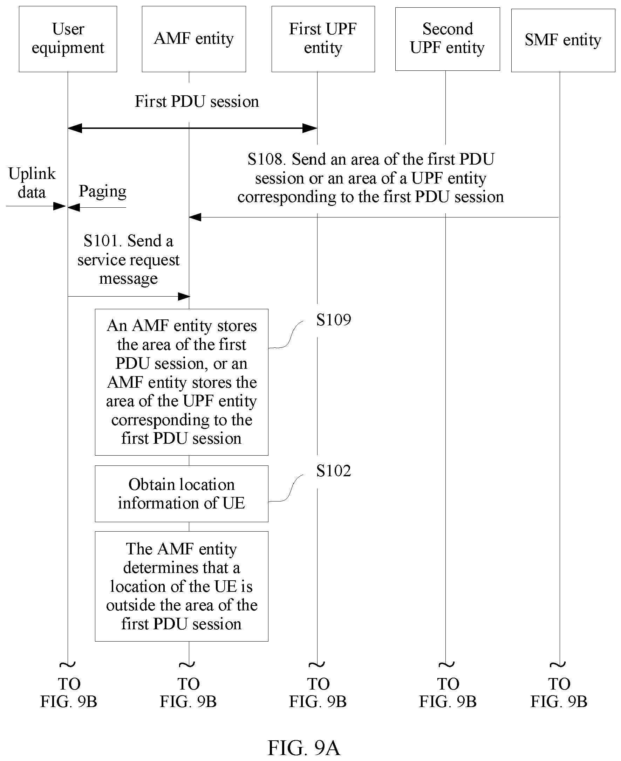

In this example of the present disclosure, in a scenario in which the AMF entity determines that there is a need to perform UPF entity relocation, with reference to FIG. 8, as shown in FIG. 9A, before step S102, the method provided in this example of the present disclosure further includes the following steps.

S108. The SMF entity sends, to the AMF entity, the area corresponding to the first PDU session, or the SMF entity sends, to the AMF entity, a service area of a UPF entity corresponding to the first PDU session, where the service area of the UPF entity includes at least the area corresponding to the first PDU session or an identifier of a UPF entity selected for the first PDU session.

It may be understood that, when the AMF entity receives the service area of the UPF entity corresponding to the first PDU session, the AMF entity may determine, from the service area of the UPF entity, the area corresponding to the first PDU session. In this way, the AMF entity may determine, based on the location of the UE, whether the UE is outside the area corresponding to the first PDU session.

S109. The AMF entity stores the area corresponding to the first PDU session, or the AMF entity stores the service area of the UPF entity corresponding to the first PDU session.

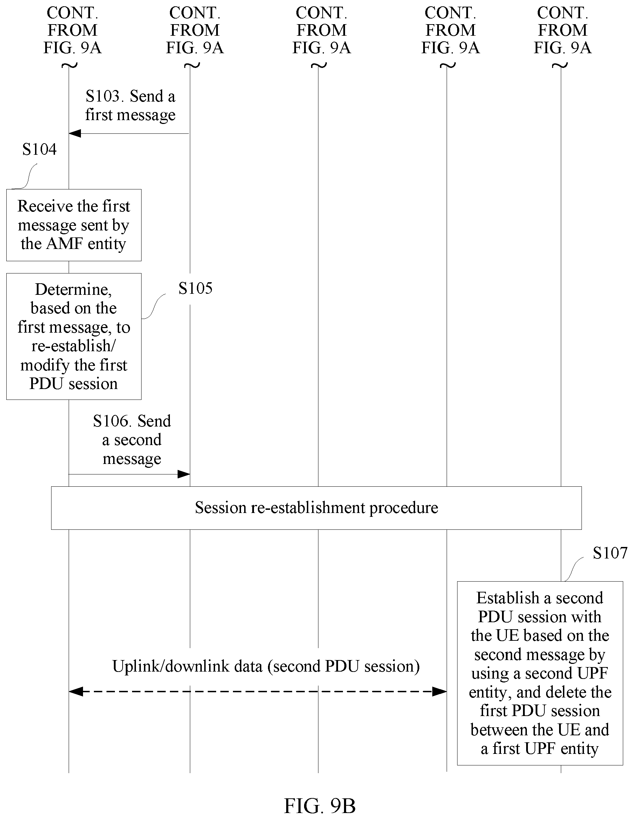

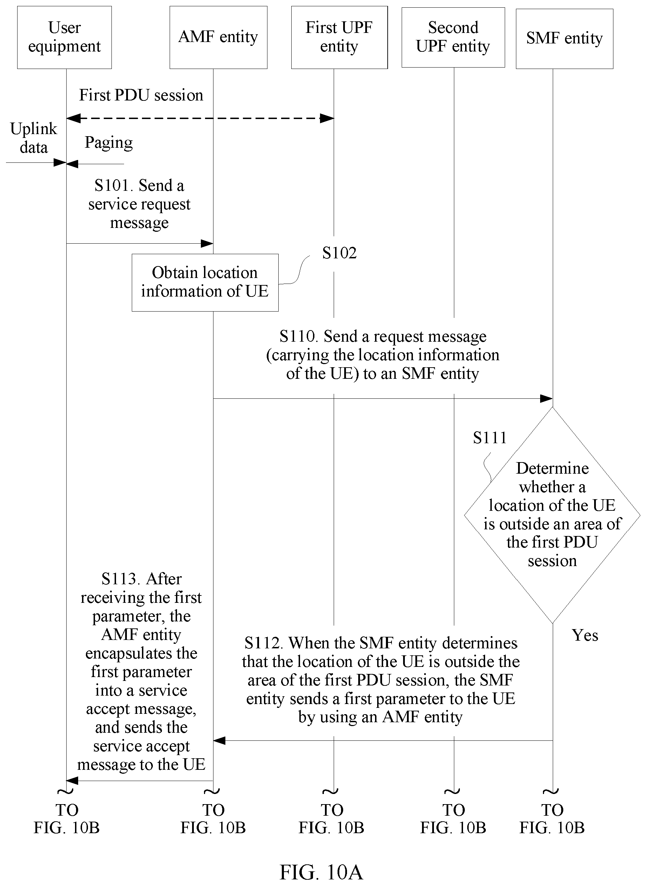

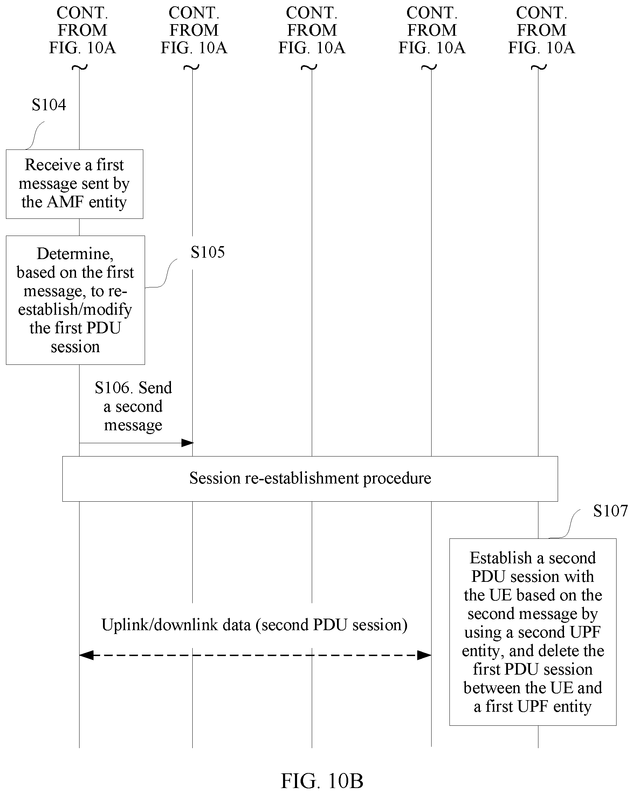

As shown in FIG. 10A and FIG. 10B, FIG. 10A and FIG. 10B show another implementation of a session management method. A difference between FIG. 10A and FIG. 10B and each of FIG. 8, and FIG. 9A and FIG. 9B lies in that in FIG. 8 and FIG. 9A and FIG. 9B, the AMF entity performs UPF entity relocation, but in FIG. 10A and FIG. 10B, the SMF entity performs UPF entity relocation.

Correspondingly, step S103 may be further implemented in the following manner:
S110. The AMF entity sends a request message to the SMF entity, where the request message may be used by the SMF entity to determine whether the location of the UE is outside the area corresponding to the first PDU session.

Optionally, the request message carries the location information of the UE or carries a second indication. The second indication is used to indicate whether the location of the UE is outside the area corresponding to the first PDU session.
S111. The SMF entity determines, based on the request message, whether the location of the UE is outside a service area of the UPF entity corresponding to the first PDU session, and performs S112 if the location of the UE is outside the service area of the UPF entity corresponding to the first PDU session.
S112. When the SMF entity determines that the location of the UE is outside the service area of the UPF entity corresponding to the first PDU session, the SMF entity sends a first parameter to the UE by using the AMF entity, where the first parameter is used to instruct to re-establish or modify the first PDU session.

Optionally, the first parameter includes the identifier of the first PDU session and the first indication, the identifier is used to identify the first PDU session, and the first indication is used to instruct the UE to re-establish or modify a PDU session.

Optionally, step S112 may be further specifically implemented in the following manner:
S112a. The SMF entity determines a session continuity mode of the first PDU session.
S112b. When the SMF entity determines that the session continuity mode of the first PDU session is a first session mode or a second session mode, and that the location of the UE is outside the service area of the UPF entity corresponding to the first PDU session, the SMF entity sends the first parameter to the UE by using the AMF entity.
S113. After receiving the first parameter, the AMF entity encapsulates the first parameter into a service accept message, and sends the service accept message to the UE.

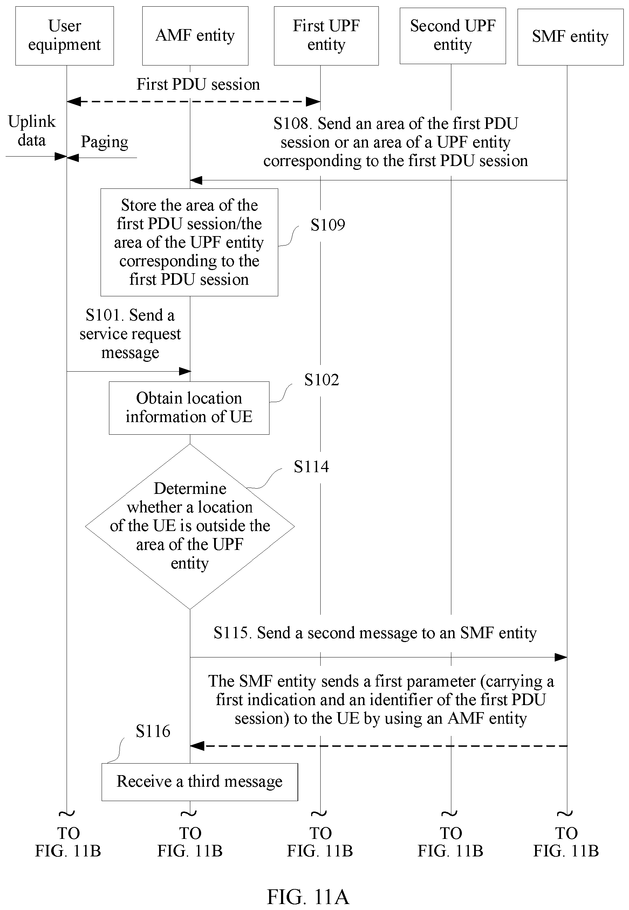

Correspondingly, as shown in FIG. 11A, step S103 may be alternatively implemented in the following manner:
S114. The AMF entity determines whether the location of the UE is outside the area corresponding to the first PDU session, and performs S115 if the location of the UE is outside the area corresponding to the first PDU session.
S115. The AMF entity sends a second message to the SMF entity when determining that the location of the UE is outside the area corresponding to the first PDU session, where the second message is used to trigger the SMF entity to send a third message.

Optionally, the second message carries the location information of the UE or a second indication.

The second indication is used to indicate that the location of the UE is outside the area corresponding to the first PDU session.

S116. The AMF entity receives the third message sent by the SMF entity, where the third message carries an identifier of the first PDU session and a first indication.

S117. The AMF entity encapsulates the identifier of the first PDU session and the first indication as the first message, and then sends the first message to the UE.

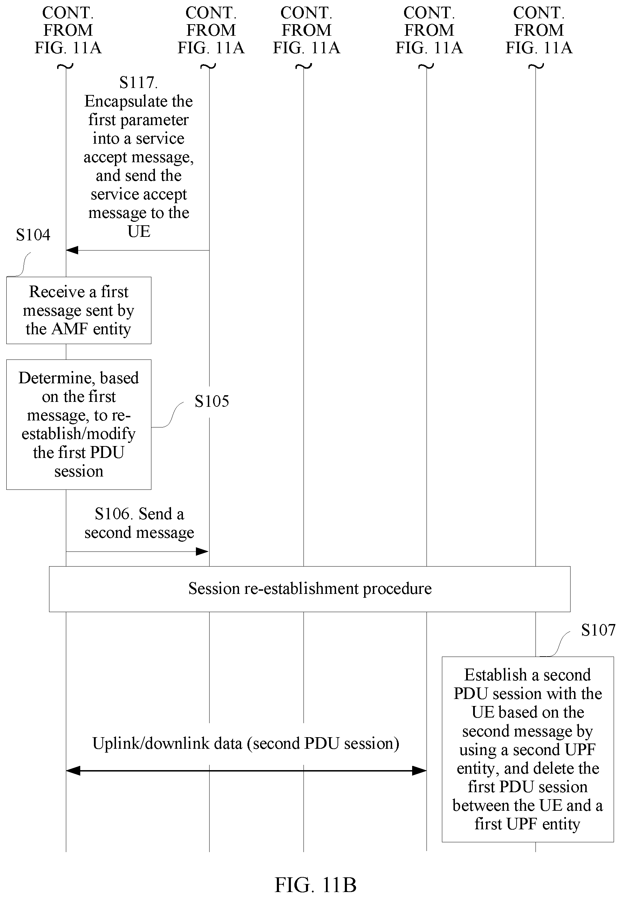

It may be learned through comparison between FIG. 11A and FIG. 11B and FIG. 10A and FIG. 10B that, a difference between FIG. 11A and FIG. 11B and FIG. 10A and FIG. 10B lies in the following: In FIG. 10A and FIG. 10B, the AMF entity only sends the location information of the UE to the SMF entity, and the SMF entity determines whether the location of the UE is outside the area corresponding to the first PDU session. However, in FIG. 11A and FIG. 11B, the AMF entity sends a trigger message to the SMF entity after determining, based on the location of the UE and the area that is corresponding to the first PDU session and that is stored in the AMF entity or the service area that is of the UPF entity corresponding to the first PDU session and that is stored in the AMF entity, that the location of the UE is outside the area corresponding to the first PDU session; and in this case, the SMF entity can directly send the third message to the AMF entity without determining whether the location of the UE is outside the area corresponding to the first PDU session.

It should be noted that, in the example shown in FIG. 11 A, the SMF entity needs to perform S108 before step S103. However, in the example shown in FIG. 10A, steps S108 and S109 may be omitted.

It may be understood that, in the session management method shown in FIG. 8 to FIG. 11A and FIG. 11B, before S101 is performed, the first PDU session is established between the UE and the SMF entity by using the first UPF entity.

In the foregoing example, it is described that a UPF entity relocation process is triggered by using the AMF entity and the SMF entity as execution bodies. It may be understood that, in an actual use process, the UPF entity relocation process may be triggered by the UE. An example in which the UE triggers UPF entity relocation is used for description in the following example.

In a UPF entity relocation process triggered by the UE, the UE may trigger UPF entity relocation by using a session modification (PDU Session Modification) procedure, or trigger UPF entity relocation by using a service request (Service Request) procedure, or trigger UPF entity relocation by using a registration (Registration) procedure. In a process in which the UE interacts with the AMF entity or the SMF entity, different signaling is generated in different trigger procedures. Therefore, specific implementation processes of different trigger procedures are separately described below.

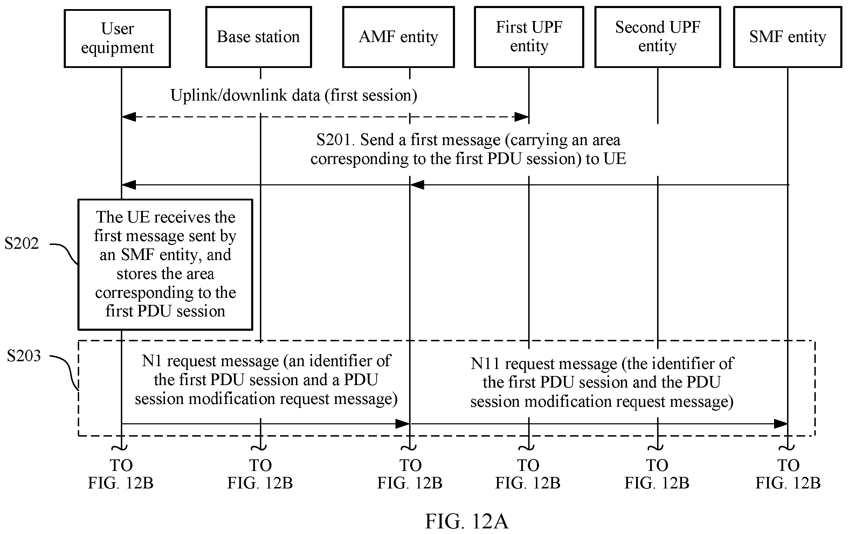

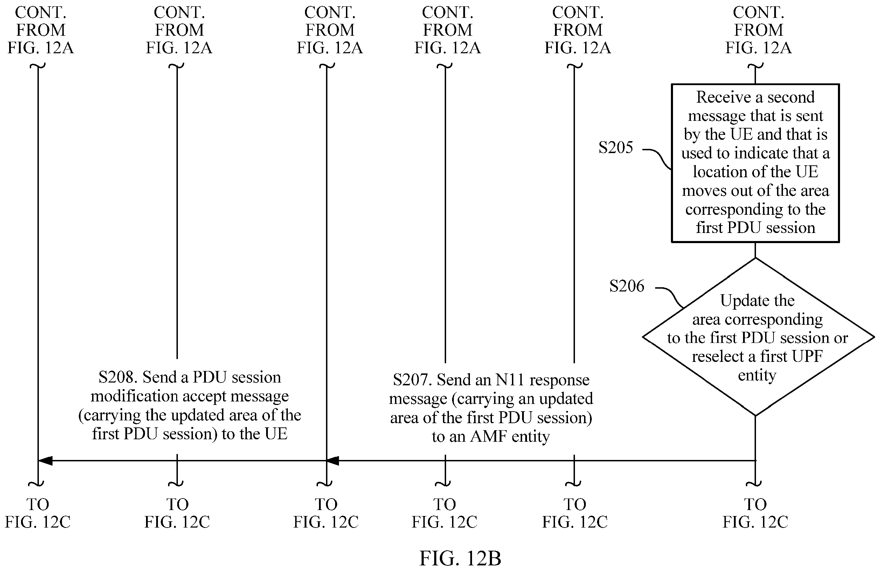

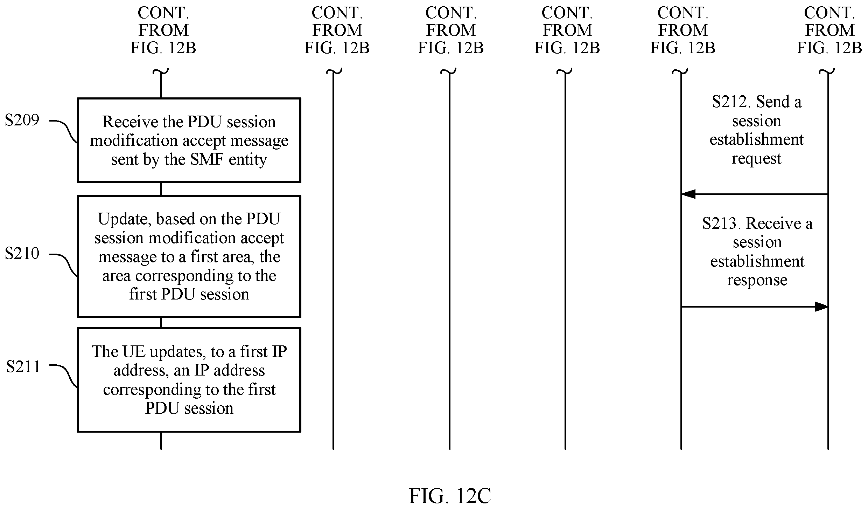

As shown in FIG. 12A, FIG. 12B, and FIG. 12C, FIG. 12A, FIG. 12B, and FIG. 12C show another session management method according to an example of the present disclosure by using an example in which UE triggers UPF entity relocation by using a session modification procedure and a target entity is an SMF entity. The method includes the following steps.

S201. In a process in which the user equipment UE establishes a first protocol data unit PDU session, the SMF entity sends a first message to the UE, where the first message includes an area corresponding to the first PDU session.

It may be understood that, the first message including the area corresponding to the first PDU session is forwarded to the UE by the SMF entity by using an AMF entity.

Optionally, the first message carries at least the area corresponding to the first PDU session.

Optionally, the area corresponding to the first PDU session may include the following cases: a service area of a UPF entity corresponding to the first PDU session; a partial area selected by using a location of the UE as a center from a service area of a UPF entity corresponding to the first PDU session; an area generated by the SMF entity with reference to a service area of a UPF entity corresponding to the first PDU session and a service area of an adjacent UPF entity having a same function as the UPF entity; an area determined by the SMF entity with reference to a registration (registration) area and a service area of a UPF entity, where the registration area is allocated by the AMF entity to the UE and received by the SMF entity, for example, an intersection set of the registration area and the service area of the UPF entity or a subset of an intersection set of the registration area and the service area of the UPF entity is selected as the area corresponding to the first PDU session; or an area that is corresponding to the first PDU session and that is generated by the SMF entity with reference to a registration area, a service area of a selected UPF entity, and a service area of an adjacent UPF entity having a same function as the UPF entity, where the registration area is allocated by the AMF entity to the UE and received by the SMF entity.

S202. The UE receives the first message sent by the SMF entity, and stores the area corresponding to the first PDU session, where the first message includes the area corresponding to the first PDU session.

S203. When the UE moves out of the area corresponding to the first PDU session, the UE sends a second message to the SMF entity, where the second message is used to indicate that a location of the UE is outside the area corresponding to the first PDU session, that is, the UE moves out of the area corresponding to the first PDU session.

It should be noted that, that the UE moves out of the area corresponding to the first PDU session may be one of conditions for sending the second message by the UE. Another condition that needs to be met before the UE sends the second message is not specifically limited or described in the present disclosure.

For example, the second message is a PDU session modification request message sent by the UE to the SMF entity. The PDU session modification request message carries at least one of location information of the UE and a second indication. The second indication is used to indicate that the UE moves out of the area corresponding to the first PDU session.

In the session management method provided in this disclosure, in the process in which the UE establishes the first PDU session, the SMF entity provides, for the UE, the area corresponding to the first PDU session. In this way, when the UE is in an idle state, once the UE is outside the area corresponding to the first PDU session, the UE triggers the PDU session modification request message to update the area corresponding to the first PDU session. In this process, the SMF entity performs UPF relocation. Therefore, it may be ensured that UPF entity relocation is performed before data is transmitted, so as to ensure that data is not lost.

It may be understood that, the second message sent by the UE to the SMF entity in step S203 is sent to the SMF entity by using the AMF entity. Specifically, as shown in FIG. 12A, the UE sends an N1 request message to the AMF entity. The N1 request message carries an identifier of the first PDU session and the PDU session modification request message. After receiving the N1 message, the AMF entity sends an N11 request message to the SMF entity based on the identifier of the first PDU session. The N11 request message carries the identifier of the first PDU session and the PDU session modification request message.

For example, the second message is the PDU session modification request message sent by the UE to the SMF entity. The PDU session modification request message carries at least one of location information of the UE and a second indication. The second indication is used to indicate that the UE moves out of the area corresponding to the first PDU session. It may be understood that, the UE further needs to add the identifier of the first PDU session to the PDU session modification request message. With reference to the identifier of the first PDU session and the second indication, the SMF entity can determine that the UE moves out of the area corresponding to the first PDU session.

In an aspect in this example of the present disclosure, the UE can immediately send the second message to the SMF entity when determining that the location of the UE is outside the area corresponding to the first PDU session. In this case, if the UE is in an idle state at a current moment, the UE is immediately switched from the idle state to a connected state, and sends the second message to the SMF entity. In another aspect, when the UE determines that the location of the UE is outside the area corresponding to the first PDU session, if the UE is in an idle state in this case, the UE may not be immediately switched from the idle state to a connected state, and instead, the UE continues to keep in the idle state for a period of time based on a normal requirement, and is switched from the idle state to the connected state only when the UE needs to send data or receives network paging, and the UE sends the second message to the target entity. To be specific, that the location of the UE is outside the area corresponding to the first PDU session cannot be used as a trigger condition for entering the connected state from the idle state by the UE.

Therefore, in an implementation, the first message further includes a first indication. The first indication is used to instruct the UE to send the second message to the target entity after the UE determines that the location of the UE is outside the area corresponding to the first PDU session, and when a status of the UE is switched from an idle state to a connected state or when the UE has uplink data arriving in the first PDU session.

It may be understood that, in this example of the present disclosure, that the UE enters a connected state from an idle state means the above descriptions: When the UE is in an idle state, the UE is not immediately switched from the idle state to a connected state, and instead, the UE continues to keep in the idle state for a period of time based on a normal requirement, and is switched from the idle state to the connected state only when the UE needs to send data or respond to paging. After entering the connected state, the UE sends the second message to perform UPF relocation. In another implementation, the first message further includes a first indication. The first indication is used to instruct the UE to immediately send the second message to the target entity after the UE determines that the location of the UE is outside the area corresponding to the first PDU session. It may be understood that, in this example of the present disclosure, when the UE determines that the location of the UE is outside the area corresponding to the first PDU session, the UE may actively determine whether to immediately send the second message to the target entity or send the second message to the target entity only when the UE needs to be switched from an idle state to a connected state. When the UE actively determines to send the second message to the target message, the first indication in the first message may be omitted.

Optionally, because the UE sends the second message to the SMF entity only when the UE needs to be switched from an idle state to a connected state, the method provided in this example of the present disclosure further includes the following step: S204. When determining that the location of the UE is outside the area corresponding to the first PDU session, the UE marks the first PDU session with a to-be-updated state, where the to-be-updated state is used to prompt the UE to send the second message to the UE when the UE is switched from an idle state to a connected state, so as to indicate that the location of the UE is outside the area corresponding to the first PDU session. To be specific, when the UE determines that the location of the UE is outside the area corresponding to the first PDU session, if the UE is in an idle state in this case and does not need to be immediately switched to a connected state, the UE first marks the first PDU session with the to-be-updated state. In this way, the UE sends the second message to the target entity when the UE needs to be switched from the idle state to the connected state or when the UE has uplink data arriving in the first PDU session.

S205. The SMF entity receives the second message that is sent by the UE and that is used to indicate that the UE moves out of the area corresponding to the first PDU session.

S206. The SMF entity updates, based on the second message, the area corresponding to the first PDU session, or reselects a second UPF entity based on the second message to serve the first PDU session.

Optionally, the second message carries the location information of the UE, and step S206 may be specifically implemented in the following manner: If a session and service continuity mode of the first PDU session is a first session mode or a second session mode, when determining that the UE moves out of the area corresponding to the first PDU session and that the UE is inside the service area of the user plane function UPF entity corresponding to the first PDU session, the SMF entity updates the area corresponding to the first PDU session; or the SMF entity reselects a second UPF entity when determining that the UE moves out of the area corresponding to the first PDU session and that the UE moves out of the service area of the UPF entity corresponding to the first PDU session.

Optionally, in an aspect, when the SMF entity determines that there is a need to update the area corresponding to the first PDU session, after step S206, the method provided in this example of the present disclosure further includes the following steps:
S207. The SMF entity sends an N11 response message to an AMF entity, where the N11 response message carries a first area, and the first area is an updated area of the first PDU session.
S208. The AMF entity sends a third message to the UE.

When the UE requests to trigger UPF entity relocation by using the session modification procedure, the third message is a PDU session modification accept message sent by the AMF entity to the UE. S209. The UE receives the third message sent by the AMF entity.

S210. The UE updates, based on the third message to the first area, the area corresponding to the first PDU session.

Optionally, the UE updates, to a first QoS flow template, a flow template corresponding to a QoS flow in the first PDU session.

Optionally, after receiving a first IP address, the UE locally updates the QoS flow template. In an implementation, the UE replaces, with the first IP address, a source IP address in a packet filter in the QoS flow template.

Optionally, the N11 response message further includes a first IP address, and therefore the third message further includes the first IP address. The first IP address is an updated IP address of the first PDU session.

Optionally, the method provided in this example of the present disclosure further includes the following step:
S211. The UE updates, to a first IP address, an IP address corresponding to the first PDU session.

In the session management method provided in this disclosure, in the process in which the UE establishes the first PDU session, the SMF entity provides, for the UE, the area corresponding to the first PDU session. In this way, when the UE is in an idle state, once the UE is outside the area corresponding to the first PDU session, the UE triggers the PDU session modification request message to update the area corresponding to the first PDU session. In this process, the SMF entity performs UPF relocation. Therefore, it may be ensured that UPF entity relocation is performed before data is transmitted, so as to ensure that data is not lost.

Optionally, in another aspect, when the SMF entity determines that there is a need to reselect a second UPF entity, the method provided in this example of the present disclosure further includes the following steps:
S212. The SMF entity sends a session establishment request to the second UPF entity, where the session establishment request carries an identifier of the first PDU session.
S213. The SMF entity receives a session establishment response sent by the second UPF entity.

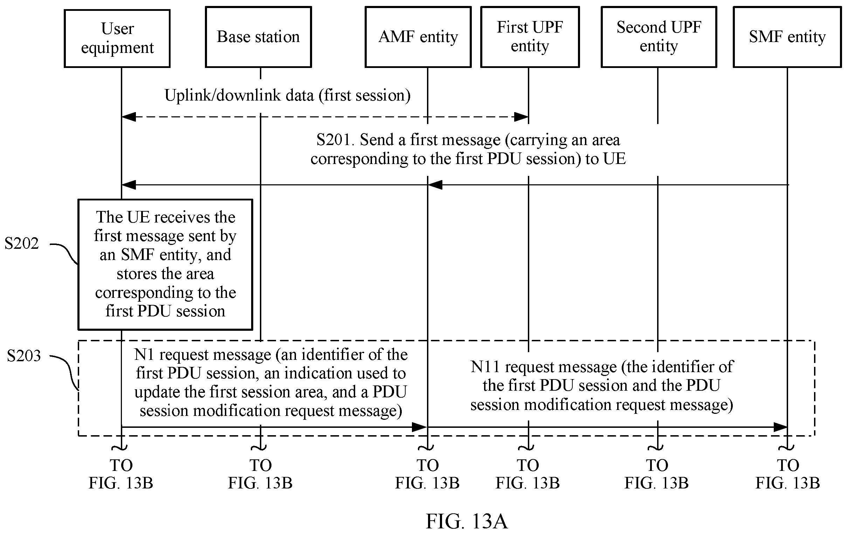

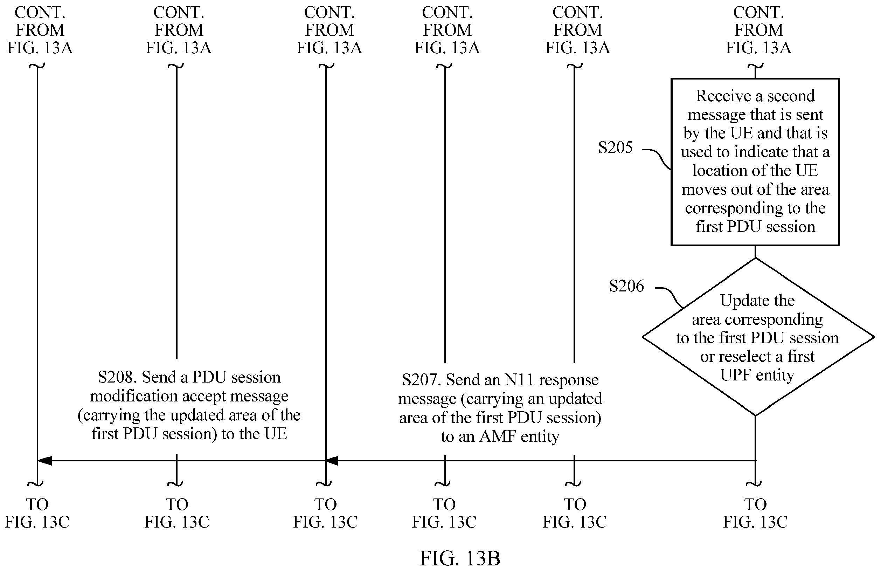

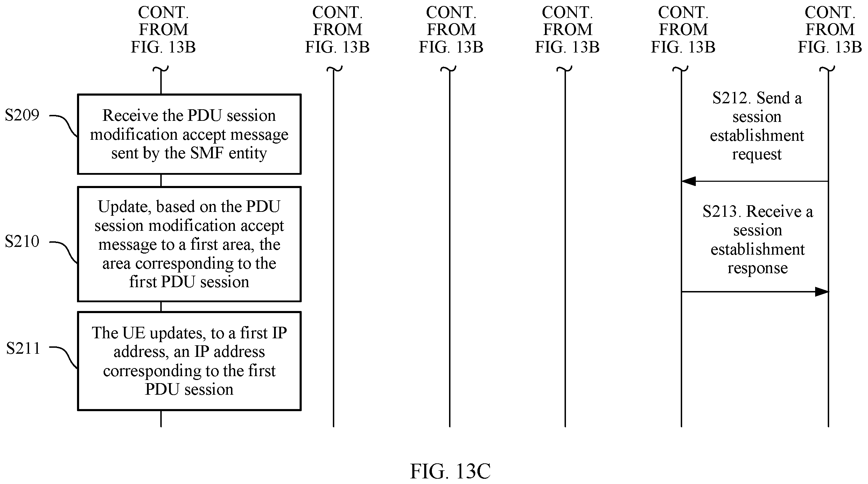

As shown in FIG. 13A, FIG. 13B, and FIG. 13C, a difference between FIG. 13A, FIG. 13B, and FIG. 13C and FIG. 12A, FIG. 12B, and FIG. 12C lies in the following: In FIG. 12A, FIG. 12B, and FIG. 12C, the N1 request message sent by the UE to the AMF entity carries the identifier of the first PDU session and the PDU session modification request message, and the PDU session modification request message includes the location information of the UE. Then, after receiving the request message, the AMF entity sends the identifier of the first PDU session and the PDU session modification request message to the SMF entity, so that the SMF entity determines, based on the location of the UE, the service area of the UPF entity corresponding to the first PDU session, and a session mode of the first PDU session, to update the area corresponding to the first PDU session or reselect a second UPF entity. However, in FIG. 13A, FIG. 13B, and FIG. 13C, the N1 request message sent by the UE to the AMF entity carries the identifier of the first PDU session, an indication used to update the first session area, and the PDU session modification request message. Then, after receiving the N1 request message sent by the UE, the AMF entity sends, to an SMF entity indicated by the identifier of the first PDU session, the location information of the UE and the PDU session modification request message based on the indication used to update the first session area (it may be understood that, the AMF entity stores a mapping relationship between an identifier of the SMF entity and the identifier of the first PDU session, and the SMF entity sends, to the AMF entity, the mapping relationship between the identifier of the SMF entity and the identifier of the first PDU session after the first PDU session is established).

In the session management method provided in this disclosure, in the process in which the UE establishes the first PDU session with the SMF entity, the SMF entity provides, for the UE, the area corresponding to the first PDU session. In this way, when the UE is in an idle state, once the UE is outside the area corresponding to the first PDU session, the UE triggers the PDU session modification request message to update the area corresponding to the first PDU session. In this process, the SMF entity performs UPF relocation. Therefore, it may be ensured that UPF entity relocation is performed before data is transmitted, so as to ensure that data is not lost.

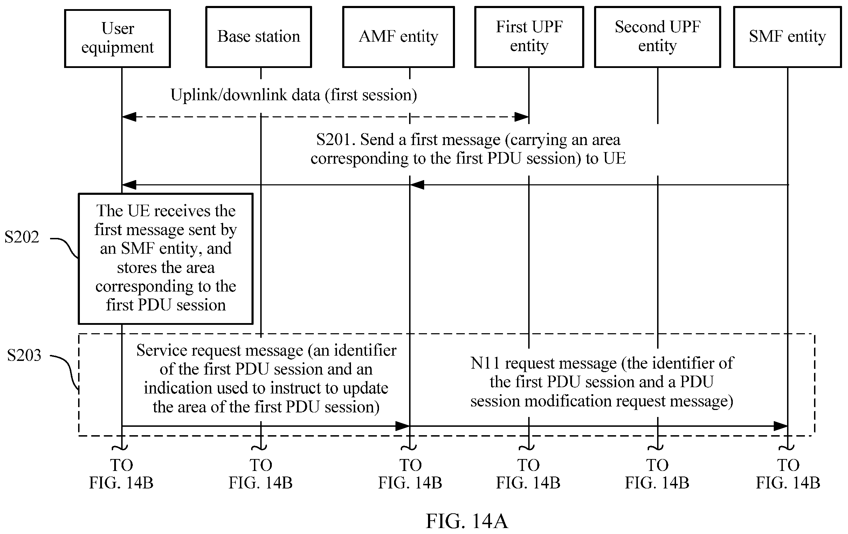

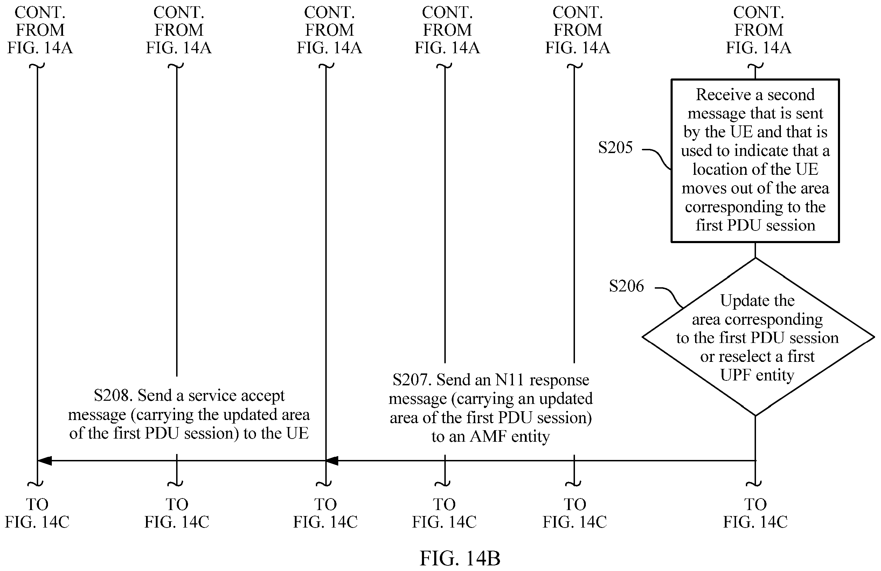

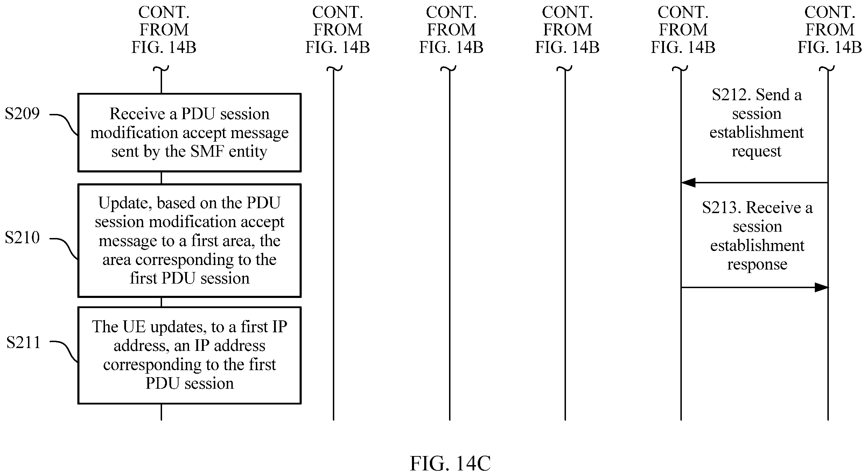

As shown in FIG. 14A, FIG. 14B, and FIG. 14C, FIG. 14A, FIG. 14B, and FIG. 14C show another session management method according to an example of the present disclosure by using an example in which UE triggers UPF entity relocation by using a service request message procedure and a target entity is an AMF entity. Specifically, a difference between FIG. 14A, FIG. 14B, and FIG. 14C and FIG. 12A, FIG. 12B, and FIG. 12C lies in that the second message sent by the UE in step S203 is a service request message sent to the AMF entity. The service request message carries the identifier of the first PDU session and an indication used to instruct to update the area of the first PDU session. Then, the AMF entity sends, to an SMF entity indicated by the identifier of the first PDU session, the location information of the UE and the identifier of the first PDU session based on the indication used to instruct to update the area of the first PDU session. When the UE triggers UPF entity relocation by using the service request message procedure, the third message is a service accept message sent by the AMF entity to the UE.

In the session management method provided in this disclosure, in the process in which the UE establishes the first PDU session with the SMF entity, the SMF entity provides, for the UE, the area corresponding to the first PDU session. In this way, when the UE is in an idle state, once the UE is outside the area corresponding to the first PDU session, the UE triggers the PDU session modification request message to update the area corresponding to the first PDU session. In this process, the SMF entity performs UPF relocation. Therefore, it may be ensured that UPF entity relocation is performed before data is transmitted, so as to ensure that data is not lost.

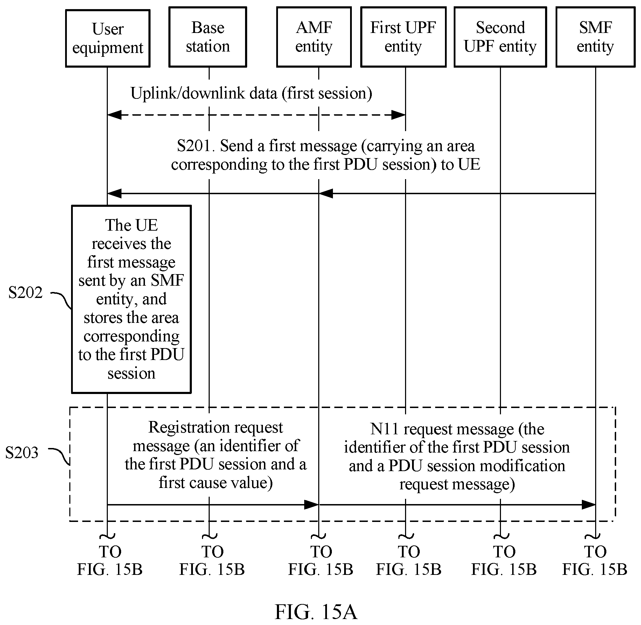

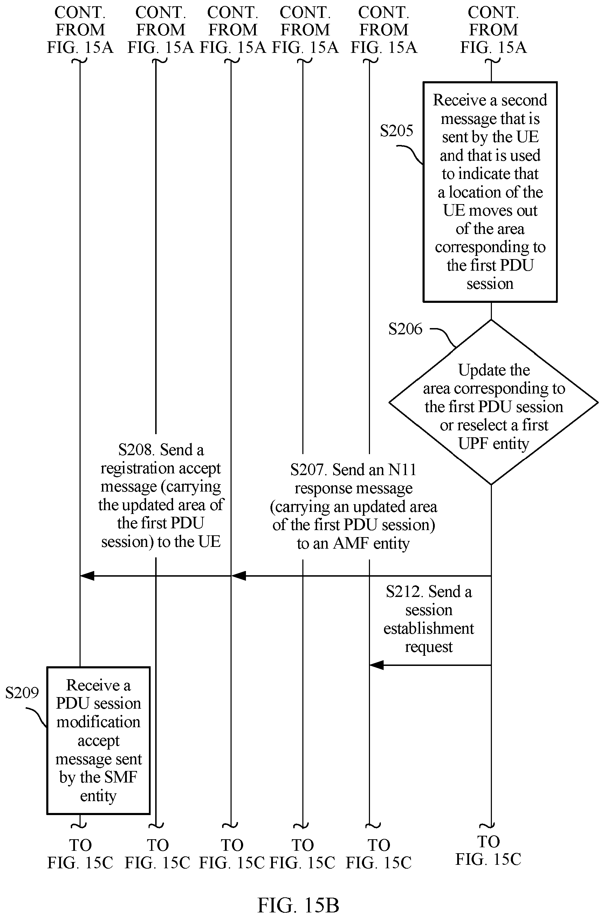

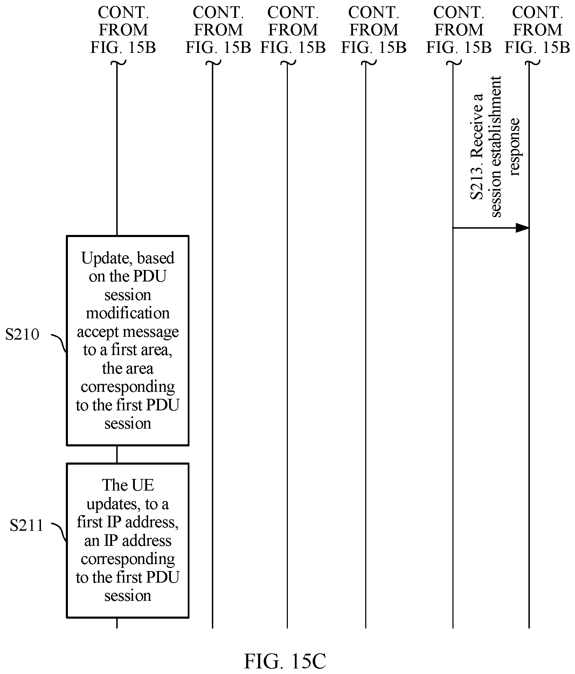

As shown in FIG. 15A, FIG. 15B, and FIG. 15C, FIG. 15A, FIG. 15B, and FIG. 15C are described by using an example in which a target entity is an AMF entity and UE triggers UPF entity relocation by using a registration procedure. A difference between an example described in FIG. 15A, FIG. 15B, and FIG. 15C and that described in FIG. 14A, FIG. 14B, and FIG. 14C lies in that the second message sent by the UE to the AMF entity is a registration request message sent by the UE to the AMF entity. The registration request message carries a first cause value, and the first cause value is used to indicate that the UE moves out of the area corresponding to the first PDU session. Then, the AMF entity determines, based on the first cause value, to send the location information of the UE to the SMF entity.

It may be understood that, in this example of the present disclosure, in order that an SMF entity that re-establishes a second PDU session is the same as the SMF entity that establishes the first PDU session, a request message or the registration request message or a service request message that is sent by the UE to the AMF entity carries the identifier of the first PDU session. In this way, it may be ensured that the AMF entity sends the location information of the UE to an SMF entity that has a mapping relationship with the first PDU session.

When the UE requests to trigger UPF entity relocation by using the registration procedure, the third message is a registration accept message sent by the AMF entity to the UE.

In the session management method provided in this disclosure, in the process in which the UE establishes the first PDU session with the SMF entity, the SMF entity provides, for the UE, the area corresponding to the first PDU session. In this way, when the UE is in an idle state, once the UE is outside the area corresponding to the first PDU session, the UE triggers the PDU session modification request message to update the area corresponding to the first PDU session. In this process, the SMF entity performs UPF relocation. Therefore, it may be ensured that UPF entity relocation is performed before data is transmitted, so as to ensure that data is not lost.

The foregoing describes the solutions provided in this disclosure mainly from a perspective of interaction between user equipment, an AMF entity, and an SMF entity. It may be understood that, to implement the foregoing functions, the user equipment, the AMF entity, the SMF entity, and the like include corresponding hardware structures and/or software modules for performing the functions. A person skilled in the art should be easily aware that, with reference to the user equipment, the AMF entity, the SMF entity, and method steps in the examples described in the examples disclosed in this specification, the present disclosure can be implemented in a form of hardware or a combination of hardware and computer software. Whether a function is performed in a form of hardware or hardware driven by computer software depends on particular applications and design constraint conditions of the technical solutions. A person skilled in the art may use different methods to implement the described functions for each particular application, but it should not be considered that the implementation goes beyond the scope of this disclosure.

In the examples of the present disclosure, the user equipment, the AMF entity, the SMF entity, and the like may be divided into function modules based on the foregoing method examples. For example, each function module may be obtained through division for each corresponding function, or two or more functions may be integrated into one processing module. The integrated module may be implemented in a form of hardware, or may be implemented in a form of a software function module. It should be noted that, the module division in the examples of the present disclosure is an example, and is only logical function division. There may be another division manner in actual implementation.

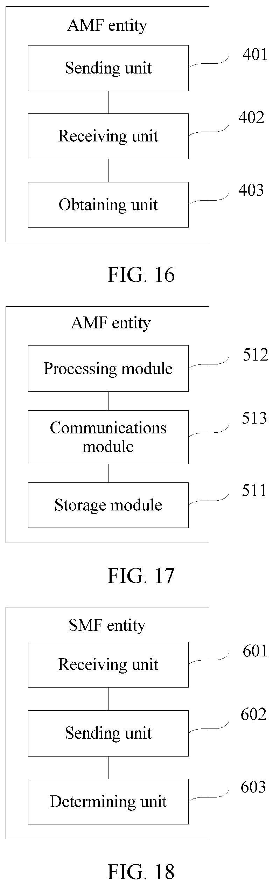

When each function module is obtained through division for each corresponding function, FIG. 16 is a possible schematic structural diagram of an AMF entity used in the foregoing example. An AMF entity 10 includes a sending unit 401 and a receiving unit 402. The receiving unit 402 is configured to support the AMF entity 10 in performing steps S102 and S116 in the foregoing example, and the sending unit 401 is configured to support the AMF entity 10 in performing steps S103, S110, S113, S115, S117, and S208 in the foregoing example. It may be understood that, the AMF entity 10 provided in this example of the present disclosure may further include: an obtaining unit 403, configured to support the AMF entity in performing step S102 in the foregoing example; and a storing unit 404, configured to support the AMF entity in performing step S109 in the foregoing example. All related content of each step in the foregoing method example may be cited in function descriptions of a corresponding function module, and details are not described herein. Specifically, in hardware implementation, the receiving unit 402 may be a receiver of the AMF entity 10, and the sending unit 401 may be a transmitter of the AMF entity 10. The transmitter and the receiver may be integrated to constitute a transceiver shown in FIG. 5. The obtaining unit 403 and the storing unit 404 may be integrated into a processor of the AMF entity 10.

When an integrated unit is used, FIG. 17 is a schematic diagram of a possible logical structure of the AMF entity 10 used in the foregoing example. The AMF entity 10 includes a processing module 512 and a communications module 513. The processing module 512 is configured to control and manage an action of the AMF entity 10. For example, the processing module 512 is configured to perform steps S102 and S116, steps S103, S110, S113, S115, S117, S208, and S102, and step S109 in the foregoing example, and/or is configured to perform another process of the technology described in this specification. The communications module 513 is configured to support the AMF entity 10 in communicating with user equipment and an SMF entity. The AMF entity 10 may further include a storage module 511, configured to store program code and data of the AMF entity 10.

The processing module 512 may be a processor or a controller, for example, may be a central processing unit, a general purpose processor, a digital signal processor, an application-specific integrated circuit, a field programmable gate array or another programmable logical device, a transistor logical device, a hardware component, or any combination thereof. The controller/processor may implement or execute various example logical blocks, modules, and circuits described with reference to content disclosed in the present disclosure. Alternatively, the processor may be a combination that implements a computing function, for example, a combination including one or more microprocessors, or a combination of a digital signal processor and a microprocessor. The communications module 513 may be a transceiver, a transceiver circuit, a transceiver, or the like. The storage module 511 may be a memory.

When the processing module 512 is a processor, the communications module 513 is a transceiver, and the storage module 511 is a memory, the AMF entity used in this example of the present disclosure may be a device shown in FIG. 5.

When each function module is obtained through division for each corresponding function, FIG. 18 is a possible schematic structural diagram of an SMF entity used in the foregoing example. An SMF entity 20 includes: a receiving unit 601, configured to receive a first message that is sent by an access and mobility management function AMF entity and that is used to instruct the SMF entity to determine whether UE moves out of an area corresponding to a first PDU session; a sending unit 602, configured to support the SMF entity in performing steps S112, S112b, and S108 in the foregoing example; a determining unit 603, configured to determine a session continuity mode of the first PDU session and perform S112a; and a judging unit, configured to support the SMF entity in performing step S111 in the foregoing example. All related content of each step in the foregoing method example may be cited in function descriptions of a corresponding function module, and details are not described herein.

Specifically, in hardware implementation, the sending unit 601 may be a transmitter of the SMF entity, the receiving unit 602 may be a receiver of the SMF entity. The receiver and the transmitter may be integrated to constitute a transceiver of the SMF entity 20, as shown in FIG. 6. The determining unit 603 may be integrated into a processor of the SMF entity 20.

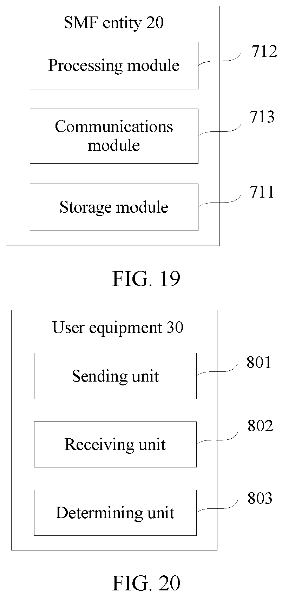

When an integrated unit is used, FIG. 19 is a schematic diagram of a possible logical structure of the SMF entity 20 used in the foregoing example. The SMF entity 20 includes a processing module 712 and a communications module 713. The processing module 712 is configured to control and manage an action of the SMF entity 20. For example, the processing module 712 is configured to support the SMF entity 20 in performing steps that are performed by an SMF entity in the example shown in FIG. 8 to FIG. 11A and FIG. 11B. For example, the processing module 712 is configured to receive a first message that is sent by an access and mobility management function AMF entity and that is used to instruct the SMF entity to determine whether UE moves out of an area corresponding to a first PDU session, perform S108 and steps S112 and S112b, and determine a session continuity mode of the first PDU session and perform S112a, and/or is configured to perform another process of the technology described in this specification. The communications module 713 is configured to support the SMF entity 20 in communicating with the AMF entity. The SMF entity 20 may further include a storage module 711, configured to store program code and data of the SMF entity 20.

The processing module 712 may be a processor or a controller, for example, may be a central processing unit, a general purpose processor, a digital signal processor, an application-specific integrated circuit, a field programmable gate array or another programmable logical device, a transistor logical device, a hardware component, or any combination thereof. The controller/processor may implement or execute various example logical blocks, modules, and circuits described with reference to content disclosed in the present disclosure. Alternatively, the processor may be a combination that implements a computing function, for example, a combination including one or more microprocessors, or a combination of a digital signal processor and a microprocessor. The communications module 713 may be a transceiver, a transceiver circuit, a transceiver, or the like. The storage module 711 may be a memory.

When the processing module 712 is a processor, the communications module 713 is a transceiver, and the storage module 711 is a memory, the SMF entity used in this example of the present disclosure may be a device shown in FIG. 6.

When each function module is obtained through division for each corresponding function, FIG. 20 is a possible schematic structural diagram of user equipment used in the foregoing example. User equipment 30 includes a sending unit 801, a receiving unit 802, and a determining unit 803. The sending unit 801 is configured to support the UE in performing S101 and S106 in the foregoing example. The receiving unit 802 is configured to support the user equipment 30 in performing step S104 in the foregoing example. The determining unit 803 is configured to support the user equipment 30 in performing step S105 in the foregoing example. All related content of each step in the foregoing method example may be cited in function descriptions of a corresponding function module, and details are not described herein.

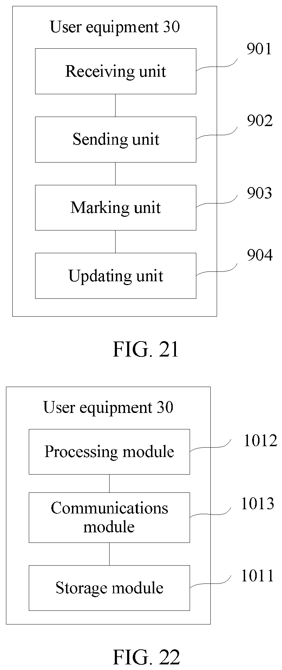

When each function module is obtained through division for each corresponding function, FIG. 21 is a possible schematic structural diagram of user equipment used in the foregoing example. User equipment 30 includes a receiving unit 901, a sending unit 902, and a marking unit 903. The receiving unit 901 is configured to support the UE in performing S202 and S209 in the foregoing example. The sending unit 902 is configured to support the user equipment 30 in performing step S203 in the foregoing example. The marking unit 903 is configured to support the user equipment 30 in performing step S204 in the foregoing example. The user equipment further includes an updating unit 904, configured to support the user equipment in performing S210 and S211. All related content of each step in the foregoing method example may be cited in function descriptions of a corresponding function module, and details are not described herein.

Specifically, in hardware implementation, the sending unit 801 and the sending unit 902 may be a transmitter of the user equipment 30, the receiving unit 802 and the receiving unit 901 may be a receiver of the user equipment 30. The receiver and the transmitter may be integrated to constitute a transceiver of the user equipment 30, as shown in FIG. 7. The updating unit 904 and the marking unit 903 may be integrated into a processor of the user equipment 30.

When an integrated unit is used, FIG. 22 is a schematic diagram of a possible logical structure of the user equipment 30 used in the foregoing example. The user equipment 30 includes a processing module 1012 and a communications module 1013. The processing module 1012 is configured to control and manage an action of the user equipment 30. For example, the processing module 1012 is configured to support the user equipment 30 in performing all steps that are performed by UE in FIG. 8 to FIG. 11A and FIG. 11B, and/or is configured to perform another process of the technology described in this specification. The communications module 1013 is configured to support the user equipment 30 in communicating with an AMF entity. The user equipment 30 may further include a storage module 1011, configured to store program code and data of the user equipment 30.

The processing module 1012 may be a processor or a controller, for example, may be a central processing unit, a general purpose processor, a digital signal processor, an application-specific integrated circuit, a field programmable gate array or another programmable logical device, a transistor logical device, a hardware component, or any combination thereof. The controller/processor may implement or execute various example logical blocks, modules, and circuits described with reference to content disclosed in the present disclosure. Alternatively, the processor may be a combination that implements a computing function, for example, a combination including one or more microprocessors, or a combination of a digital signal processor and a microprocessor. The communications module 1013 may be a transceiver, a transceiver circuit, a transceiver, or the like. The storage module 1011 may be a memory.

When the processing module 1012 is a processor, the communications module 1013 is a transceiver, and the storage module 1011 is a memory, the user equipment used in this example of the present disclosure may be a device shown in FIG. 7.

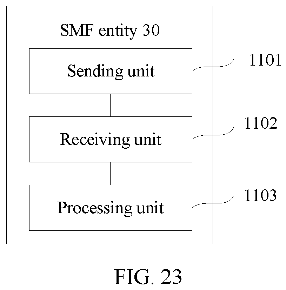

FIG. 23 is a possible schematic structural diagram of an SMF entity used in the foregoing example. An SMF entity 20 includes a sending unit 1101, a receiving unit 1102, and a processing unit 1103.

The sending unit 1101 is configured to support user equipment in performing steps S201, S207, and S212 in the foregoing example. The receiving unit 1102 is configured to support the SMF entity in performing S205 and S213 in the foregoing example. The processing unit 1103 is configured to support the SMF entity in performing S206 in the foregoing example. All related content of each step in the foregoing method example may be cited in function descriptions of a corresponding function module, and details are not described herein.

Specifically, in hardware implementation, the sending unit 1101 may be a transmitter of the SMF entity, the receiving unit 1102 may be a receiver of the SMF entity. The receiver and the transmitter may be integrated to constitute a transceiver of the SMF entity 20, as shown in FIG. 6. The processing unit 1103 may be integrated into a processor of the SMF entity 20.

When an integrated unit is used, the SMF entity 20 shown in FIG. 23 may use the logical structure shown in FIG. 19. Specifically, the processing module 712 shown in FIG. 19 is configured to control and manage an action of the SMF entity 20. For example, the processing module 712 is configured to support the SMF entity 20 in performing steps that are performed by an SMF entity in the example shown in FIG. 12A, FIG. 12B, and FIG. 12C to FIG. 15A, FIG. 15B, and FIG. 15C, and/or is configured to perform another process of the technology described in this specification. The communications module 713 is configured to support the SMF entity 20 in communicating with an AMF entity. The SMF entity 20 may further include a storage module 711, configured to store program code and data of the SMF entity 20.

In an aspect, an example of the present disclosure provides a computer readable storage medium, and the computer readable storage medium stores an instruction. When the computer readable storage medium runs on an SMF entity, the SMF entity performs steps that are performed by an SMF entity in the foregoing examples (including all steps performed by an SMF entity in FIG. 8 to FIG. 11A and FIG. 11B, and all steps performed by an SMF entity in FIG. 12A, FIG. 12B, and FIG. 12C to FIG. 15A, FIG. 15B, and FIG. 15C).

In another aspect, an example of the present disclosure provides a computer readable storage medium, and the computer readable storage medium stores an instruction. When the computer readable storage medium runs on an AMF entity, the AMF entity performs steps that are performed by an AMF entity in the foregoing examples (including all steps performed by an AMF entity in FIG. 8 to FIG. 11A and FIG. 11B, and all steps performed by an AMF entity in FIG. 12A, FIG. 12B, and FIG. 12C to FIG. 15A, FIG. 15B, and FIG. 15C).

In still another aspect, an example of the present disclosure provides a computer readable storage medium, and the computer readable storage medium stores an instruction. When the computer readable storage medium runs on user equipment, the user equipment performs steps that are performed by UE in the foregoing examples (including all steps performed by UE in FIG. 8 to FIG. 11A and FIG. 11B, and all steps performed by a UE entity in FIG. 12A, FIG. 12B, and FIG. 12C to FIG. 15A, FIG. 15B, and FIG. 15C).

A person skilled in the art should understand that the examples of this disclosure may be provided as a method, a system, or a computer program product. Therefore, the examples of this disclosure may use a form of hardware only examples, software only examples, or examples with a combination of software and hardware. Moreover, the examples of this disclosure may use a form of a computer program product that is implemented on one or more computer usable storage media (including but not limited to a disk memory, a CD-ROM, an optical memory, and the like) that include computer usable program code.

The examples of this disclosure are described with reference to the flowcharts and/or block diagrams of the method, the device (system), and the computer program product according to the examples of this disclosure. It should be understood that computer program instructions may be used to implement each process and/or each block in the flowcharts and/or the block diagrams, and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specified function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

## Claims

1. A session management method, comprising:
sending (S101), by a user equipment, a service request message to an access and mobility management function entity, wherein the user equipment has a first protocol data unit session between the user equipment and a first user plane function entity corresponding to the first protocol data unit session, the first protocol data unit session is in an inactive state;
in a situation that a location of the user equipment is outside a service area of the first user plane function entity corresponding to the first protocol data unit session, receiving, by the user equipment from a session management function entity via the access and mobility management function entity, a first parameter, wherein the first parameter comprises an identifier of the first protocol data unit session and a first indication, the identifier is used to identify the first protocol data unit session, the first indication indicates re-establishment of the first protocol data unit session, and the re-establishment of the first protocol data unit session comprises establishment of a second protocol data unit session to a same data network.

2. The method according to claim 1, wherein the service request message comprises an identifier of the first protocol data unit session that needs to be activated.

3. The method according to claim 1 or 2, wherein a session and service continuity mode of the first protocol data unit session is a mode comprising establishing a new protocol data unit session after releasing an existing protocol data unit session.

4. The method according to any one of claims 1 to 3, further comprises:
sending, by the user equipment for the establishment of the second protocol data unit session, a protocol data unit session establishment request message to the session management function entity based on the first parameter.

5. The method according to claim 4, wherein the sending, by the user equipment for the establishment of the second protocol data unit session, the protocol data unit session establishment request message to the session management function entity based on the first parameter, comprising:
determining (S105), by the user equipment, to re-establish the first protocol data unit session based on the first parameter; and
sending (S106), by the user equipment, the protocol data unit session establishment request message to the session management function entity.

6. The method according to any one of claims 1 to 5, wherein the first parameter is encapsulated as N1 SM information.

7. An apparatus for user equipment, wherein the apparatus comprises modules for performing the method according to any one of claims 1 to 6.

8. A computer readable storage medium, wherein the computer readable storage medium comprises an instruction which, when executed on an apparatus for user equipment, cause the apparatus to perform the method according to any one of claims 1 to 6.

## Patentansprüche

1. Sitzungsverwaltungsverfahren, umfassend:
Senden (S101), durch eine Benutzerausrüstung, einer Dienstanforderungsnachricht an eine Zugriffs- und Mobilitätsverwaltungsfunktionsentität, wobei die Benutzerausrüstung eine erste Protokolldateneinheitssitzung zwischen der Benutzerausrüstung und einer ersten Benutzerebenenfunktionsentität, die der ersten Protokolldateneinheitssitzung entspricht, aufweist und sich die erste Protokolldateneinheitssitzung in einem inaktiven Zustand befindet;
in einer Situation, in der sich ein Standort der Benutzerausrüstung außerhalb eines Dienstbereichs der ersten Benutzerebenenfunktionsentität, die der ersten Protokolldateneinheitssitzung entspricht, befindet, Empfangen, durch die Benutzerausrüstung von einer Sitzungsverwaltungsfunktionsentität über die Zugriffs- und Mobilitätsverwaltungsfunktionsentität, eines ersten Parameters, wobei der erste Parameter eine Kennung der ersten Protokolldateneinheitssitzung und eine erste Angabe umfasst, die Kennung dazu verwendet wird, die erste Protokolldateneinheitssitzung zu identifizieren, die erste Angabe eine Wiedereinrichtung der ersten Protokolldateneinheitssitzung angibt und die Wiedereinrichtung der ersten Protokolldateneinheitssitzung eine Einrichtung einer zweiten Protokolldateneinheitssitzung zu einem gleichen Datennetzwerk umfasst.

2. Verfahren nach Anspruch 1, wobei die Dienstanforderungsnachricht eine Kennung der ersten Protokolldateneinheitssitzung umfasst, die zu aktivieren ist.

3. Verfahren nach Anspruch 1 oder 2, wobei ein Sitzungs- und Dienstkontinuitätsmodus der ersten Protokolldateneinheitssitzung ein Modus ist, der Einrichten einer neuen Protokolldateneinheitssitzung nach einem Freigeben einer bestehenden Protokolldateneinheitssitzung umfasst.

4. Verfahren nach einem der Ansprüche 1 bis 3, ferner umfassend: Senden, durch die Benutzerausrüstung, für die Einrichtung der zweiten Protokolldateneinheitssitzung, einer Protokolldateneinheitssitzungs-Einrichtungsanforderungsnachricht an die Sitzungsverwaltungsfunktionsentität basierend auf dem ersten Parameter.

5. Verfahren nach Anspruch 4, wobei das Senden, durch die Benutzerausrüstung, für die Einrichtung der zweiten Protokolldateneinheitssitzung, der Protokolldateneinheitssitzungs-Einrichtungsanforderungsnachricht an die Sitzungsverwaltungsfunktionsentität basierend auf dem ersten Parameter, Folgendes umfasst:
Bestimmen (S105), durch die Benutzerausrüstung, dass die erste Protokolldateneinheitssitzung basierend auf dem ersten Parameter wiedereinzurichten ist; und
Senden (S106), durch die Benutzerausrüstung, der Protokolldateneinheitssitzungs-Einrichtungsanforderungsnachricht an die Sitzungsverwaltungsfunktionsentität.

6. Verfahren nach einem der Ansprüche 1 bis 5, wobei der erste Parameter als N1-SM-Informationen gekapselt ist.

7. Vorrichtung für eine Benutzerausrüstung, wobei die Vorrichtung Module zum Durchführen des Verfahrens nach einem der Ansprüche 1 bis 6 umfasst.

8. Computerlesbares Speichermedium, wobei das computerlesbare Speichermedium eine Anweisung umfasst, die, wenn sie auf einer Vorrichtung für eine Benutzerausrüstung ausgeführt wird, die Vorrichtung dazu veranlasst, das Verfahren nach einem der Ansprüche 1 bis 6 durchzuführen.

## Revendications

1. Procédé de gestion de session, comprenant :
l'envoi (S101), par un équipement utilisateur, d'un message de demande de service à une entité de fonction de gestion d'accès et de mobilité, dans lequel l'équipement utilisateur a une première session d'unité de données de protocole entre l'équipement utilisateur et une première entité de fonction de plan utilisateur correspondant à la première session d'unité de données de protocole, la première session d'unité de données de protocole est dans un état inactif ;
dans le cas où un emplacement de l'équipement utilisateur se trouve en dehors de la zone de service de la première entité de fonction de plan utilisateur correspondant à la première session d'unité de données de protocole, la réception, par l'équipement utilisateur en provenance d'une entité de fonction de gestion de session via l'entité de fonction de gestion d'accès et de mobilité, d'un premier paramètre, dans lequel le premier paramètre comprend un identifiant de la première session d'unité de données de protocole et une première indication, l'identifiant est utilisé pour identifier la première session d'unité de données de protocole, la première indication indique le ré-établissement de la session d'unité de donnée de protocole, et le ré-établissement de la première session d'unité de données de protocole comprend l'établissement d'une seconde session d'unité de données de protocole sur un même réseau de données.

2. Procédé selon la revendication 1, dans lequel le message de demande de service comprend un identifiant de la première session d'unité de données de protocole qui doit être activée.

3. Procédé selon la revendication 1 ou 2, dans lequel un mode de continuité de session et de service de la première session d'unité de données de protocole est un mode comprenant l'établissement d'une nouvelle session d'unité de données de protocole après la libération d'une session d'unité de données de protocole existante.

4. Procédé selon l'une quelconque des revendications 1 à 3, comprend en outre :
l'envoi, par l'équipement utilisateur pour l'établissement de la seconde session d'unité de données de protocole, d'un message de demande d'établissement de session d'unité de données de protocole à l'entité de fonction de gestion de session sur la base du premier paramètre.

5. Procédé selon la revendication 4, dans lequel l'envoi, par l'équipement utilisateur pour l'établissement de la seconde session d'unité de données de protocole, du message de demande d'établissement de session d'unité de données de protocole à l'entité de fonction de gestion de session sur la base du premier paramètre, comprenant :
la détermination (S105), par l'équipement utilisateur, pour ré-établir la première session d'unité de données de protocole sur la base du premier paramètre ; et
l'envoi (S106), par l'équipement utilisateur, du message de demande d'établissement de session d'unité de données de protocole à l'entité de fonction de gestion de session.

6. Procédé selon l'une quelconque des revendications 1 à 5, dans lequel le premier paramètre est encapsulé sous forme d'informations N1 SM.

7. Appareil pour équipement utilisateur, dans lequel l'appareil comprend des modules pour réaliser le procédé selon l'une quelconque des revendications 1 à 6.

8. Support de stockage lisible par ordinateur, dans lequel le support de stockage lisible par ordinateur comprend une instruction qui, lorsqu'elle est exécutée sur un appareil pour équipement utilisateur, amène l'appareil à réaliser le procédé selon l'une quelconque des revendications 1 à 6.
